# EUROPEAN PATENT APPLICATION

(11) **EP 4 507 317 A1**
(43) Date of publication of application: **12.02.2025**
(21) Application number: 23779247.8
(22) Date of filing: 03.03.2023
(51) Int. Cl.: H04N 23/611, G02B 7/28, G03B 7/091, G03B 15/00, G03B 17/02, G03B 17/18, H04N 23/60, H04N 23/63

(54) **INFORMATION PROCESSING DEVICE, INFORMATION PROCESSING METHOD, AND RECORDING MEDIUM**

(30) Priority: 01.04.2022 JP 2022061930
(71) Applicant: Sony Group Corporation, Tokyo 108-0075 (JP)
(72) Inventor: TANIGUCHI, Keiichiro, Tokyo 108-0075 (JP); NODA, Takuro, Tokyo 108-0075 (JP)
(74) Representative: D Young & Co LLP
(86) International application number: PCT/JP2023/008151
(87) International publication number: WO 2023/189218

(57) **Abstract**

An imaging control technology, which is appropriate in a case in which "imaging while doing" is performed, capable of providing a captured image appropriately perceiving an object at which a user is gazing even in the case in which so-called "imaging while doing" is performed is realized.

An information processing device according to the present technology includes: a detection unit configured to detect a gazing point of a user on a real space on the basis of distance measurement information representing a distance measurement result for a predetermined range including an imaging range that is a target range of imaging on the real space as a target and estimation information of a visual line and eye positions of the user; and a control unit configured to perform control relating to the imaging using information of a gazing area set on the basis of the gazing point.

## Description

### [Technical Field]

The present technology relates to an information processing device, a method thereof, and a recording medium on which a program is recorded, and more particularly, to an information processing technology for control relating to imaging.

### [Background Art]

Various devices are widely used as imaging devices. For example, in recent years, imaging has generally been performed using smartphones with cameras.

An example of the related art includes PTL 1 below. In PTL 1 below, a technology for detecting an object at which a user is gazing on the basis of a result of eye tracking of the user is disclosed.

### [Citation List]

### [Patent Literature]

[PTL 1]
JP 2019-141620A

### [Summary]

### [Technical Problem]

Here, in imaging using an imaging device of a portable type such as a smartphone, there are cases in which, so-called "imaging while doing" is performed in which a user performs imaging while directly looking at an object that is a target rather than through a screen of the imaging device in a state in which the user is holding the imaging device to face a target object side.

In such "imaging while doing", a user is gazing at not the screen of an imaging device but a target object, and thus it is difficult for the user to check whether there is appropriate framing such as whether the target object is outside of the frame of a captured image and whether focusing, exposure adjustment, and the like that are appropriate for the target object have been performed, and the like. Thus, it becomes difficult to acquire a captured image for which a target object can be appropriately perceived inside of the captured image.

The present technology is in view of the situations described above, and an object thereof is to realize an imaging control technology that is appropriate for a case in which "imaging while doing" is performed, which is capable of providing a captured image appropriately perceiving an object at which the user is gazing also in a case in which so-called "imaging while doing" is performed.

### [Solution to Problem]

According to the present technology, there is provided an information processing device including: a detection unit configured to detect a gazing point of a user on a real space on the basis of distance measurement information representing a distance measurement result for a predetermined range including an imaging range that is a target range of imaging on the real space as a target and estimation information of a visual line and eye positions of the user; and a control unit configured to perform control relating to the imaging using information of a gazing area set on the basis of the gazing point.

"Control relating to imaging" described here, for example, broadly represents control relating to imaging such as control relating to recording of a captured image, control relating to display of a captured image, adjustment control of various parameters relating to imaging, for example, parameters of focus, zoom, exposure, and the like, control of notification of various kinds of information relating to imaging, and the like. According to the configuration described above, even when a user performs so-called "imaging while doing" in which imaging is performed while directly seeing an object that is a target not through a screen of the imaging device in a state in which the user is holding the imaging device to face a target object side, by performing control relating to imaging using information of a gazing area of the user using the control unit described above, a captured image appropriately perceiving a gazing object can be provided for the user.

In addition, an information processing method according to the present technology is an information processing method for causing an information processing device to perform: detecting a gazing point of a user on a real space on the basis of distance measurement information representing a distance measurement result for a predetermined range including an imaging range that is a target range of imaging on the real space as a target and estimation information of a visual line and eye positions of the user; and performing control relating to the imaging using information of a gazing area set on the basis of the gazing point.

The information processing method can obtain the same operation and effects as the information processing device according to the present technology described above.

Furthermore, a recording medium according to the present technology is a recording medium that is a recording medium having a program that can be read by a computer device recorded therein, the program configured to cause the computer device to execute a process of detecting a gazing point of a user on a real space on the basis of distance measurement information representing a distance measurement result for a predetermined range including an imaging range that is a target range of imaging on the real space as a target and estimation information of a visual line and eye positions of the user and performing control relating to the imaging using information of a gazing area set on the basis of the gazing point.

In accordance with such a recording medium, the information processing device according to the present technology described above can be realized.

### [Brief Description of Drawings]

[Fig. 1]

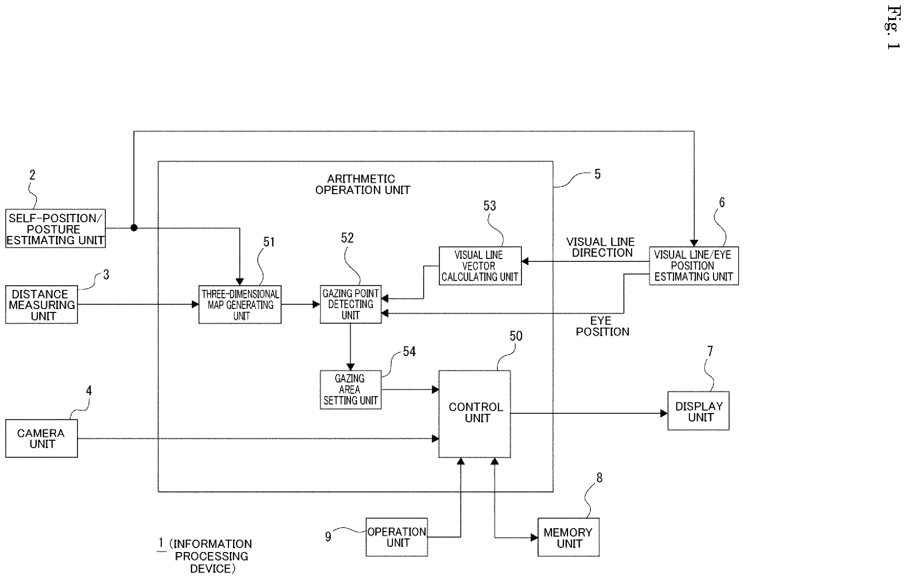

   Fig. 1 is a block diagram illustrating a configuration example of an information processing device according to a first embodiment of the present technology.
[Fig. 2]

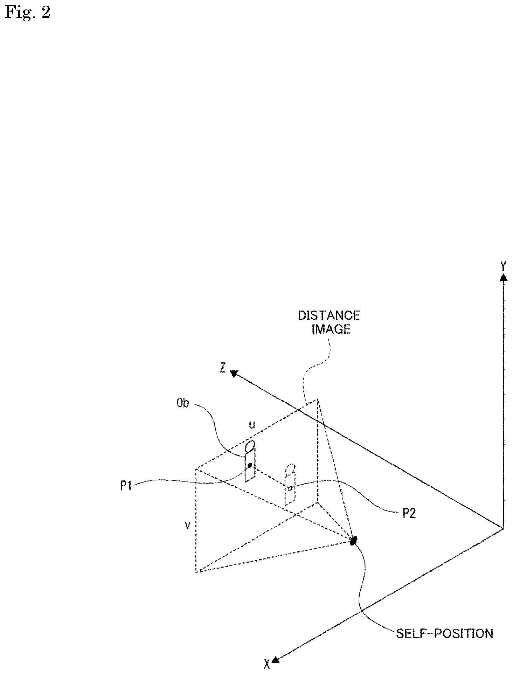

   Fig. 2 is an explanatory diagram of a technique for generating a three-dimensional map based on distance measurement information (a distance image).
[Fig. 3]

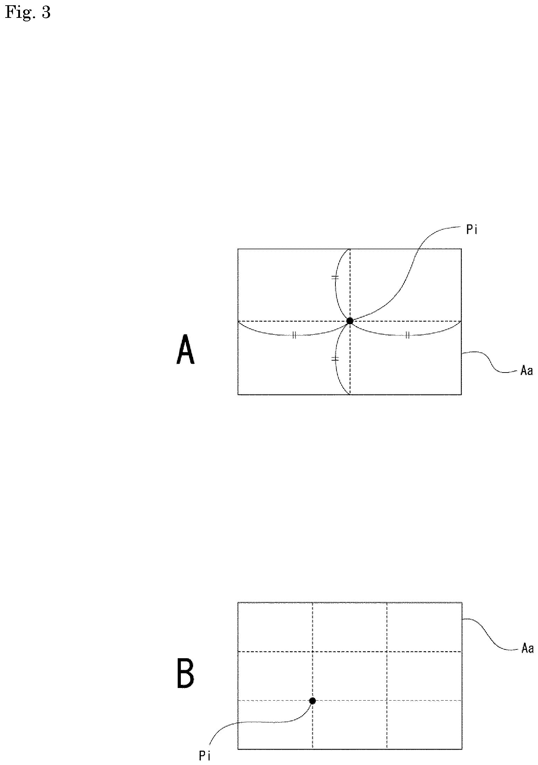

   Fig. 3 is an explanatory diagram of a setting example of a gazing area.
[Fig. 4]

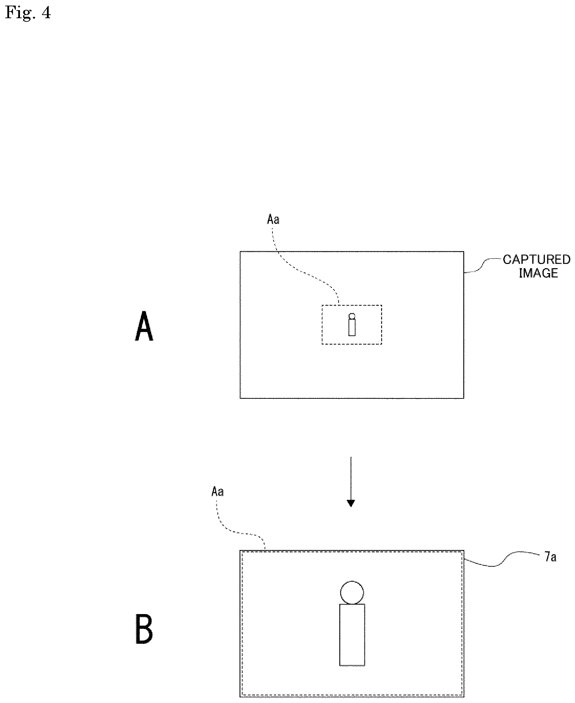

   Fig. 4 is an explanatory diagram of an example in which an extraction image of a gazing area is displayed.
[Fig. 5]

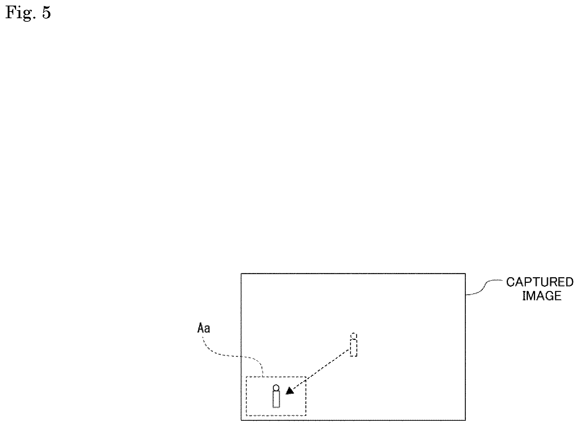

   Fig. 5 is a diagram illustrating a relation between an imaging range and a gazing area acquired in a case in which a gazing object is about to be out of the frame.
[Fig. 6]

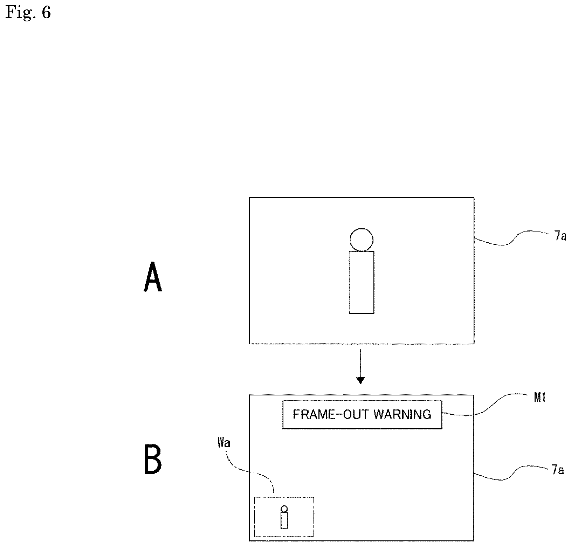

   Fig. 6 is an explanatory diagram of a display example of a case in which a gazing object is about to be out of the frame.
[Fig. 7]

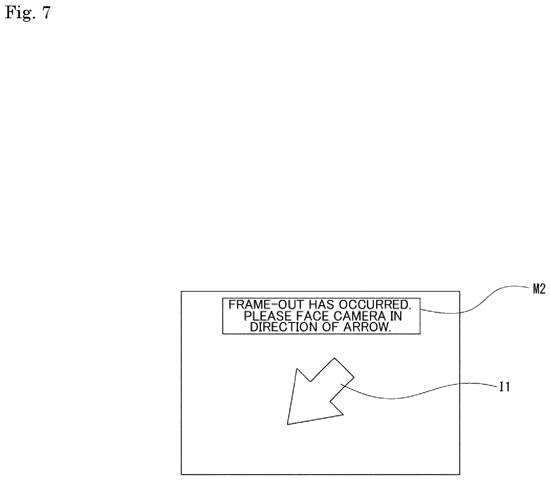

   Fig. 7 is an explanatory diagram of a display example of a case in which a gazing point is not present inside of a captured image.
[Fig. 8]

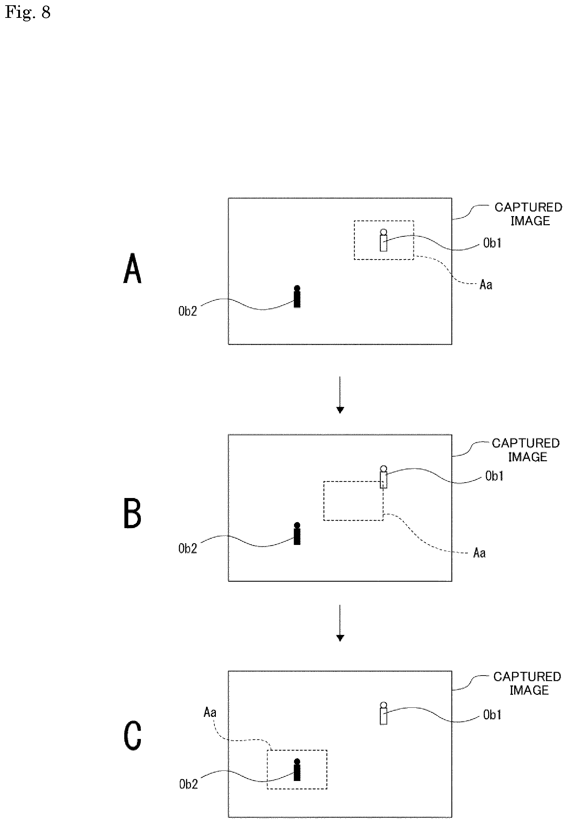

   Fig. 8 is an explanatory diagram of a first example of stepwise change control of a gazing area.
[Fig. 9]

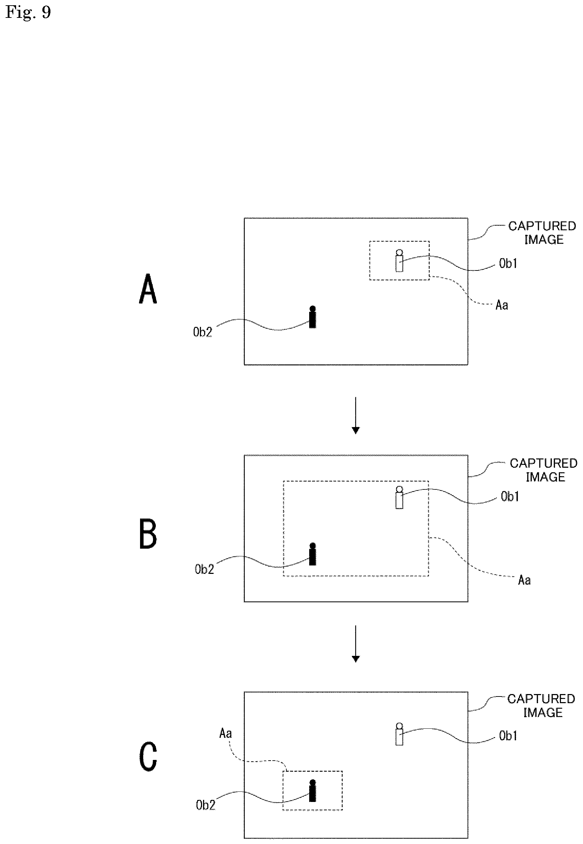

   Fig. 9 is an explanatory diagram of a second example of stepwise change control of a gazing area.
[Fig. 10]

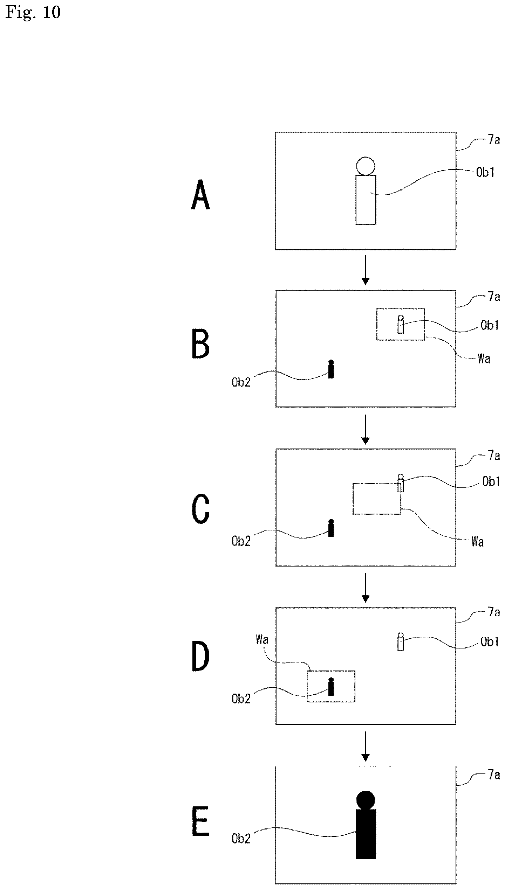

   Fig. 10 is a diagram illustrating an example of a display transition at the time of switching to a gazing area of another object.
[Fig. 11]

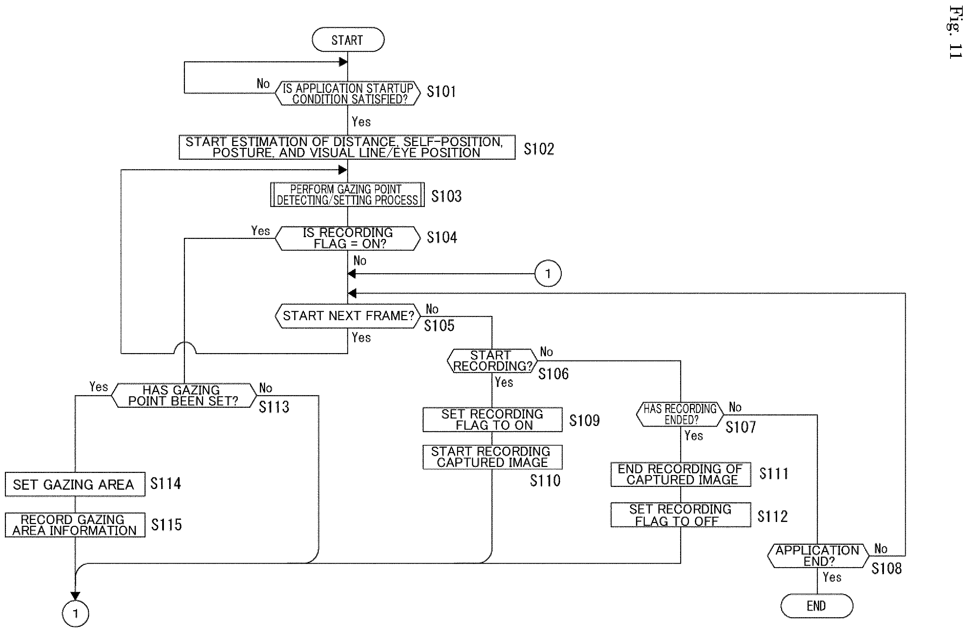

   Fig. 11 is a flowchart illustrating a processing example relating to recording of a captured image according to the first embodiment.
[Fig. 12]

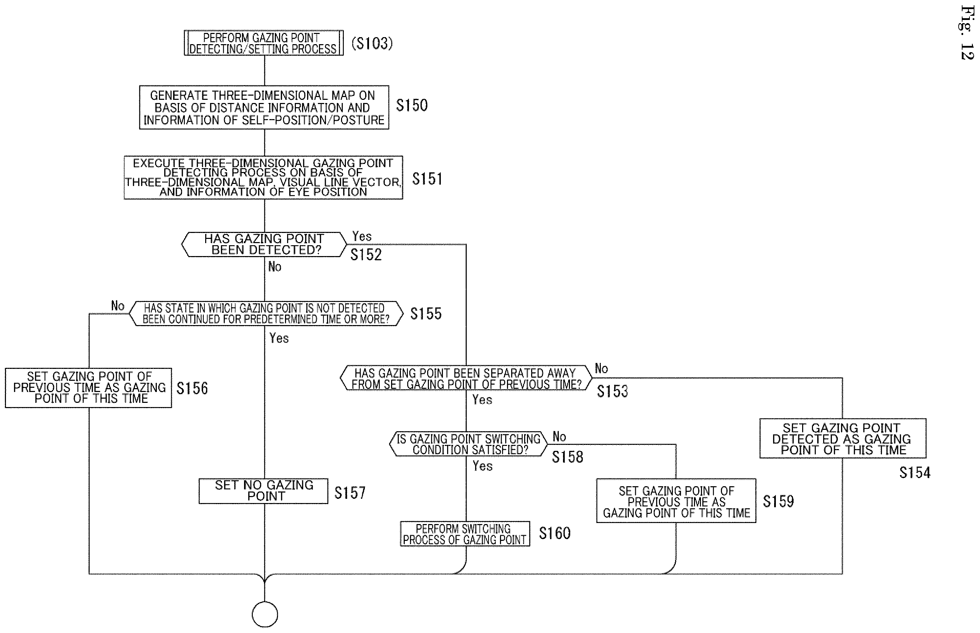

   Fig. 12 is a flowchart of a gazing point detecting/setting process illustrated in Fig. 11.
[Fig. 13]

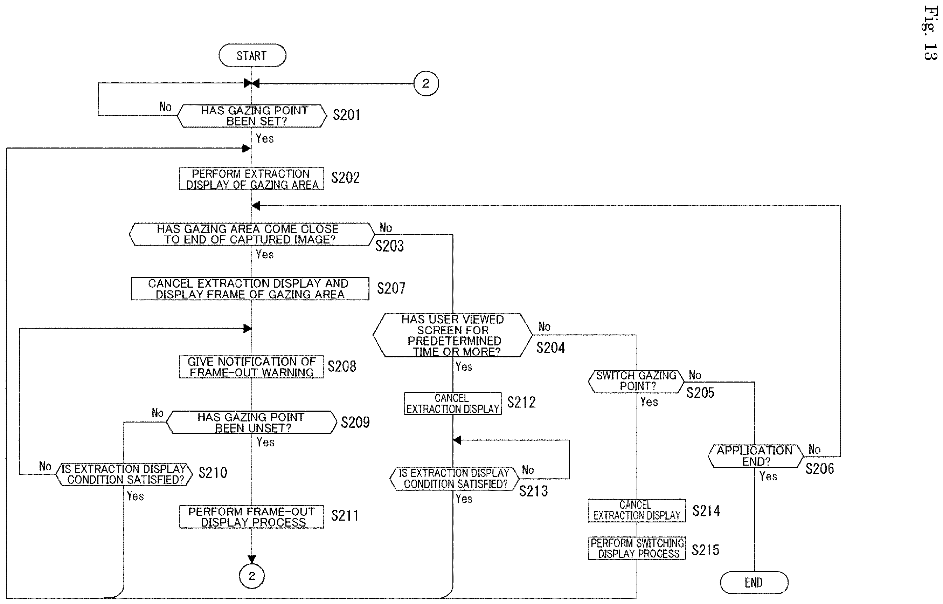

   Fig. 13 is a flowchart illustrating a processing example relating to display of a captured image according to the first embodiment.
[Fig. 14]

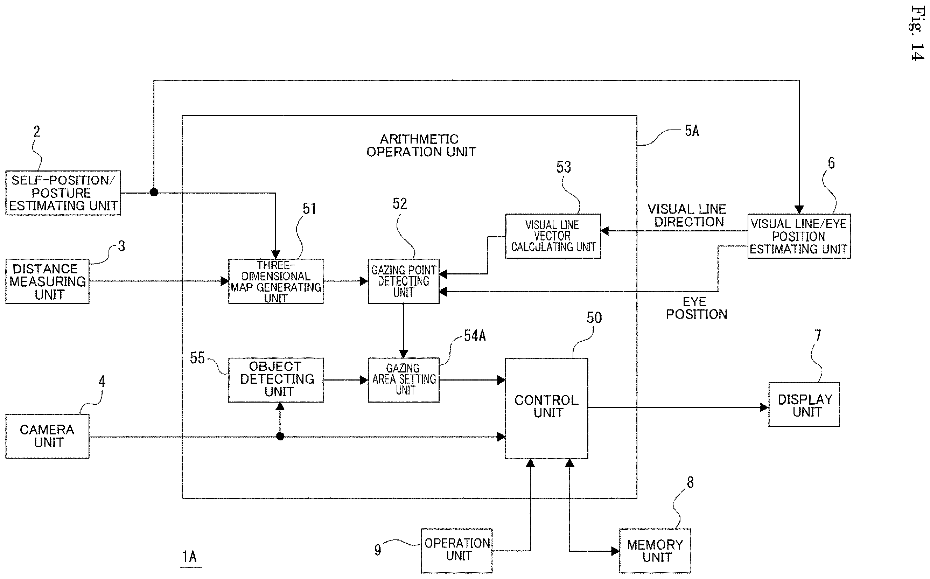

   Fig. 14 is a block diagram illustrating a configuration example of an information processing device according to a second embodiment.
[Fig. 15]

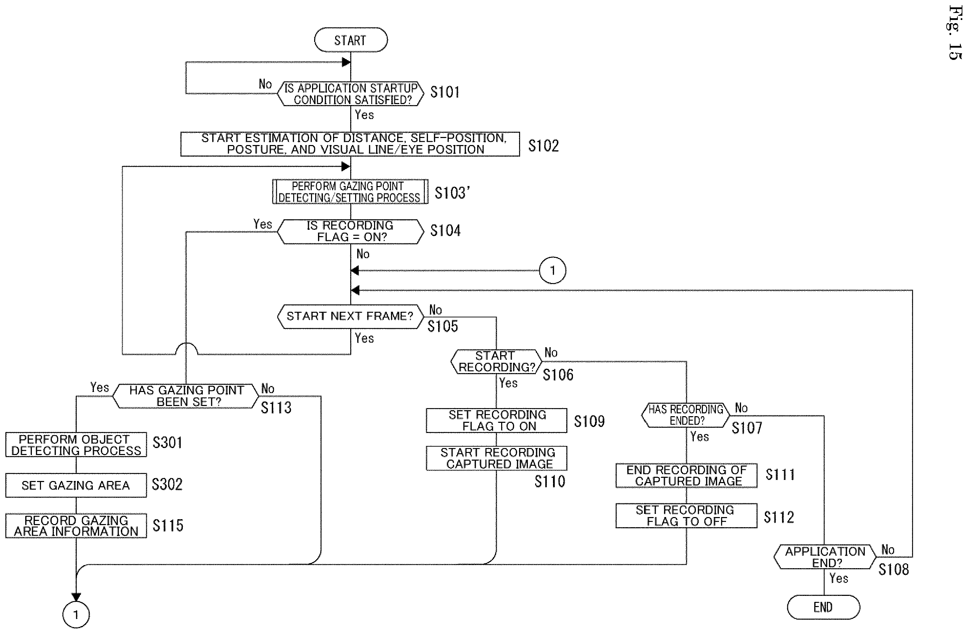

   Fig. 15 is a flowchart illustrating a processing example relating to recording of a captured image according to the second embodiment.
[Fig. 16]

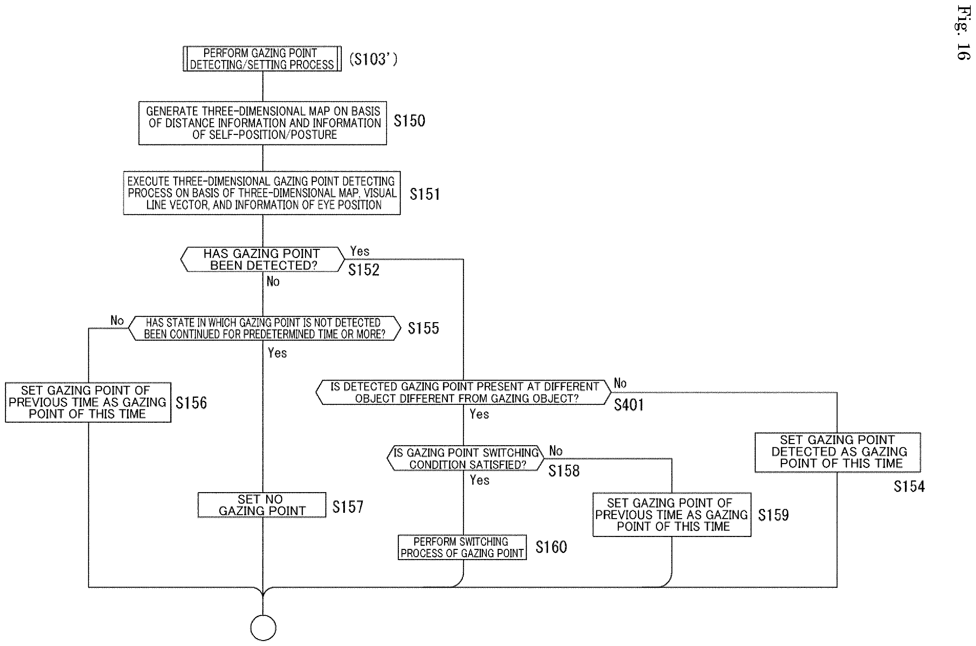

   Fig. 16 is a flowchart of a gazing point detecting/setting process illustrated in Fig. 15.

### [Description of Embodiments]

Hereinafter, embodiments related to the present technology will be described in the following order with reference to the accompanying drawings.
<1. First Embodiment>
(1-1. Configuration Example of Information Processing Device)
(1-2. Imaging Control Technique According to First Embodiment)
(1-3. Processing Procedure)
<2. Second Embodiment>
<3. Modified Example>
<4. Summary of Embodiment>
<5. Present Technology>

### <1. First Embodiment>

### (1-1. Configuration Example of Information Processing Device)

Fig. 1 is a block diagram illustrating a configuration example of an information processing device 1 according to a first embodiment of the present technology.

Here, although description will be presented on the premise that the information processing device 1 employs a device form of a smartphone, as will be described below, as an information processing device according to the present technology, a device form other than a smartphone may be employed as well.

In Fig. 1, the information processing device 1 includes a self-position/posture estimating unit 2, a distance measuring unit 3, a camera unit 4, an arithmetic operation unit 5, a visual line/eye position estimating unit 6, a display unit 7, a memory unit 8, and an operation unit 9.

The self-position/posture estimating unit 2 estimates a self-position and a posture of the information processing device 1. In this example, the self-position/posture estimating unit 2 is configured to have an inertial measurement unit (IMU) and estimates the self-position and the posture of the information processing device 1 on the basis of detection information acquired by the IMU. Here, the self-position is estimated as position information in a coordinate system (a world coordinate system) of a real space. In addition, as information of a posture, information representing the tilt of the information processing device 1 in each of directions of yaw, pitch, and roll is detected.

The distance measuring unit 3 acquires distance measurement information representing a distance measurement result for a predetermined range as a target on a real space. Here, it is assumed that the distance measuring unit 3 performs distance measurement using a time of flight (ToF) system that is one type of light detection and ranging (LiDAR) system as an example. As is well known, in the ToF system, light of a predetermined wavelength band, for example, such as infrared light or the like is transmitted through a space that is a distance measurement target, and distance measurement is performed on the basis of a result of reception of reflective light from the target. At this time, as a distance measurement sensor, a sensor in which pixels having light reception elements are two-dimensionally arranged is used. As a distance measuring process in this case, there is a process in which a predetermined arithmetic operation based on a light reception signal is performed for each pixel, and a distance to a target is acquired for each pixel. In other words, the distance measuring process is performed as a process of acquiring a distance image that is an image representing a distance to a target for each pixel.

Here, the above-described predetermined range that is a target for which the distance measuring unit 3 performs distance measurement on a real space is determined to be a range at least including an imaging range that is a target range for imaging using the camera unit 4. In other words, for at least objects present within an imaging range of the camera unit 4, distance measurement results are acquired.

The camera unit 4 is configured to include an image sensor such as an image sensor of a charge coupled device (CCD) type, an image sensor of a complementary metal oxide semiconductor (CMOS) type, or the like and acquires a captured image. In this example, the image sensor included in the camera unit 4 is configured as an RGB sensor used for acquiring an RGB image. The RGB image represents an image (a color image) representing a luminance value of R (red), a luminance value of G (green), and a luminance value of B (blue) for each pixel.

In the camera unit 4, an imaging optical system in which various optical elements such as a lens for imaging and the like are arranged is disposed, and light from a subject is received on a light reception face of the image sensor through this imaging optical system. In the imaging optical system, optical elements such as a focus lens for focusing (focus position adjustment), a diaphragm, and the like are disposed. In addition, a zoom lens for zooming may be disposed in the imaging optical system.

In addition, in the camera unit 4, an image signal processing unit that performs image signal processing for a captured image acquired using an image sensor is disposed as well. As examples of the image signal processing described here, for example, there are de-mosaic processing for a raw image output from an image sensor, an interpolation process for defective pixels, a noise reduction process, a white balance adjusting process, and the like.

Here, the direction of imaging performed by the camera unit 4 is a direction opposite to a direction in which a display screen 7a of a display unit 7 to be described below is directed.

The arithmetic operation unit 5, for example, is configured to include a microcomputer having a central processing unit (CPU), a read only memory (ROM), a random access memory (RAM), and the like, and, by the CPU executing a process according to a program stored in a predetermined storage device such as the ROM, the memory unit 8, and the like describe above, various functions of the information processing device 1 are realized.

In addition, various functions realized by the arithmetic operation unit 5 will be described below in detail.

The visual line/eye position estimating unit 6 estimates a visual line and eye positions of a user. In this example, the visual line/eye position estimating unit 6 estimates a visual line direction and eye positions of a user on the basis of a captured image of an inner camera disposed in the information processing device 1. The inner camera described here represents a camera that is disposed to image the same direction side as a direction in which the display screen 7a of the display unit 7 is directed. By using the inner camera, a face of a user gripping the information processing device 1 can be imaged, and a visual line direction and eye positions of the user can be estimated on the basis of a captured image of this inner camera.

Here, in the information processing device 1, since a position and a posture of the information processing device 1 in a world coordinate system are estimated by the self-position/posture estimating unit 2, positions of the eyes of the user in the world coordinate system, which have been detected in a captured image of the inner camera, can be estimated on the basis of information of the position and the posture of the information processing device 1 and camera parameters (a focal distance and the like) of the inner camera.

In addition, a configuration for estimating a visual line and eye positions of a user is not limited to the configuration using the inner camera as described above. For example, a configuration in which a head-mounting type device having a camera for detection of a visual line is worn by a user on the head, and a visual line direction and eye positions of the user are estimated may be considered (in this case, the visual line/eye position estimating unit 6 is separated from the information processing device 1). By employing a head-mounting type device, a visual line direction can be estimated on the basis of a captured image captured by a camera disposed near the eyes of the user. In addition, in the case of the head-mounting type device, eye positions of a user are assumed to be estimated as a position of a camera used for estimating a visual line. Alternatively, the eye positions can be approximately estimated as a position of the head of a user, and in that case, not the position of the camera used for estimating a visual line but a self-position estimated by this head-mounting type device can be used as a result of estimation of the eye positions of the user.

The display unit 7, for example, is configured to have a display capable of performing image display such as a liquid crystal display (LCD) or an organic electro-luminescence (EL) display and performs various kinds of information display based on an instruction from the arithmetic operation unit 5. For example, the display unit 7 displays a captured image captured by the camera unit 4 on the display screen 7a as a through image on the basis of an instruction from the arithmetic operation unit 5. A "through image" described here represents an image used for allowing a user to check an image that is being captured.

In addition, the display unit 7 performs display of various operation menus, icons, messages, and the like, in other words, display as a graphical user interface (GUI) on the basis of an instruction from the arithmetic operation unit 5.

The memory unit 8, for example, is configured using a non-volatile memory such as a flash memory, a hard disk drive (HDD), or the like and is used for storing various kinds of data handled by the information processing device 1. Particularly, in this example, the memory unit 8 is used as a recording destination memory of captured images captured by the camera unit 4.

The operation unit 9 comprehensively illustrates various operators and operation devices included in the information processing device 1. As the operation unit 9, for example, various operators and operation devices such as a key, a dial, a touch panel, a touch pad, a remote controller, and the like are assumed. The touch panel described here represents that it is configured to be able to detect a touch operation on the display screen 7a of the display unit 7.

A user's operation is detected by the operation unit 9, and a signal corresponding to an input operation is analyzed by the arithmetic operation unit 5.

Various functions included in the arithmetic operation unit 5 as embodiments will be described.

As illustrated in Fig. 1, the arithmetic operation unit 5 has functions as a control unit 50, a three-dimensional map generating unit 51, a gazing point detecting unit 52, a visual line vector calculating unit 53, and a gazing area setting unit 54. The three-dimensional map generating unit 51 generates a three-dimensional map for the predetermined range described above on the basis of distance measurement information acquired by the distance measuring unit 3, that is, a distance image in this example and the information of a self-position and a posture estimated by the self-position/posture estimating unit 2. Here, the three-dimensional map is information representing a position on a three-dimensional space as a real space using coordinate information (X, Y, Z) of the world coordinate system for each object (point) perceived by each pixel in the distance image.

By referring to Fig. 2, a technique for generating a three-dimensional map based on a distance image will be described.

First, as illustrated in the drawing, a coordinate system (u, v) of a distance image is set as a coordinate system.

In a case in which an object Ob is present within a range that is a target for distance measurement of the distance measuring unit 3, this object Ob can be perceived in the distance image. A certain point on the object Ob on a real space is represented as a point P1. This point P1 can be perceived as a point P2 on the distance image.

Here, coordinates (Xᵢ, Yⱼ) of a certain point on the distance image, that is, a point on a real space that can be perceived as the certain pixel (uᵢ, vⱼ) can be acquired on the basis of the self-position and the posture of the information processing device 1. More specifically, when the self-position and the posture of the information processing device 1 can be known, a conversion equation for converting the position of a certain pixel (uᵢ, vⱼ) into a position (Xᵢ, Yⱼ) in the world coordinate system can be acquired from such information, and thus, by using this conversion equation, the position (u, v) of each pixel in a distance image is converted into a position (X, Y) in the world coordinate system.

In addition, also for the Z direction, when the self-position and the posture of the information processing device 1 can be known, a conversion equation for converting a distance z measured at a certain pixel (uᵢ, vⱼ) into coordinates in the Z direction in the world coordinate system can be acquired from such information. Thus, by using this conversion equation, a distance z of each pixel in the distance image is converted into a position (Z) in the world coordinate system.

For example, by using the technique as described above, the three-dimensional map generating unit 51 generates a three-dimensional map on the basis of a distance image acquired by the distance measuring unit 3 and the information of a self-position and a posture estimated by the self-position/posture estimating unit 2.

In Fig. 1, the visual line vector calculating unit 53 calculates a visual line direction vector that is a vector representing a visual line direction of a user on a real space on the basis of information of the visual line direction of the user input from the visual line/eye position estimating unit 6 and outputs the calculated visual line direction vector to the gazing point detecting unit 52.

The gazing point detecting unit 52 detects a gazing point of a user on the basis of the three-dimensional map generated by the three-dimensional map generating unit 51, the visual line direction vector input from the visual line vector calculating unit 53, and the information of eye positions of the user estimated by the visual line/eye position estimating unit 6. Specifically, the gazing point detecting unit 52 detects an intersection with the visual line of the user on the three-dimensional map as a gazing point.

More specifically, the gazing point detecting unit 52 acquires a visual line (a line extending from the eye positions in a direction represented by the visual line direction vector) of a user on the three-dimensional map (that is, the world coordinate system) on the basis of the visual line direction vector and the information of eye positions of the user and detects an intersection with the visual line on the three-dimensional map as a gazing point.

In addition, hereinafter, the gazing point detected in the world coordinate system in this way will be denoted as "three-dimensional gazing point Pr".

The gazing area setting unit 54 sets a gazing area as an area at which a user is estimated to gaze on the basis of the gazing point detected by the gazing point detecting unit 52. In this example, this gazing area is set as an area including at least a gazing point.

Here, in this example, the gazing area setting unit 54 sets a gazing area not as an area in the world coordinate system but as an area in a coordinate system of a captured image (hereinafter, denoted as "camera coordinate system") captured by the camera unit 4. Hereinafter, a gazing area set as an area in the camera coordinate system in this way will be denoted as "gazing area Aa".

In setting this gazing area Aa, the gazing area setting unit 54 converts a three-dimensional gazing point Pr detected by the gazing point detecting unit 52 into a gazing point in the camera coordinate system. Similar to the technique of position conversion between the coordinate system of the distance image and the world coordinate system described above, this conversion can be performed on the basis of estimation information of a self-position and a posture of the information processing device 1.

Hereinafter, a gazing point in the camera coordinate system will be denoted as "on-image gazing point Pi".

An example of the setting of the gazing area Aa will be described with reference to Fig. 3.

Fig. 3A is an example in which the gazing area Aa is set such that the on-image gazing point Pi is positioned at the center of the inside of the area.

Fig. 3B is an example in which the gazing area Aa is set such that the on-image gazing point Pi is located at a position inside of an area corresponding to a so-called rule of thirds. In this case, the on-image gazing point Pi is positioned on a line or at an intersection vertically and horizontally dividing the area into three parts.

Also in any one of Figs. 3A and 3B, the gazing area setting unit 54 sets an area having positions of respective left, right, upper, and lower end parts of the area as positions of a predetermined distance from the on-image gazing point Pi as the gazing area Aa.

Here, the position inside of the gazing area Aa at which the gazing point is located, the aspect ratio of the gazing area Aa, and the like may be determined in accordance with a user operation. In other words, the composition of a gazing point that is perceived in the gazing area Aa is determined on the basis of a user operation.

In that case, the arithmetic operation unit 5 (for example, the control unit 50) accepts an operation of selecting an arbitrary composition from a plurality of compositions set in advance. Then, the gazing area setting unit 54 sets the gazing area Aa according to an aspect ratio corresponding to the selected composition such that the on-image gazing point Pi is located at a position corresponding to the selected composition.

In Fig. 1, the control unit 50 performs entire control of the information processing device 1. For example, the control unit 50 performs an operation execution instruction and an operation stop instruction for the self-position/posture estimating unit 2, the distance measuring unit 3, the camera unit 4, and the visual line/eye position estimating unit 6, display control of the display unit 7, processing of an operation input information from the operation unit 9, and the like.

Particularly, the control unit 50 according to this embodiment performs control relating to imaging using the camera unit 4 using information of the gazing area Aa set by the gazing area setting unit 54.

"Control relating to imaging" described here, for example, broadly represents control relating to imaging such as control relating to recording of a captured image, control relating to display of a captured image, adjustment control of various parameters relating to imaging, for example, parameters of focus, zoom, exposure, and the like, control of notification of various kinds of information relating to imaging, and the like.

### (1-2. Imaging Control Technique According to First Embodiment)

Hereinafter, control relating to imaging performed by the control unit 50 will be described.

As this control relating to imaging, the control unit 50 performs control relating to recording of a captured image acquired by the camera unit 4. More specifically, the control unit 50 of this example performs control of recording a captured image acquired by the camera unit 4 and information representing the gazing area Aa in the memory unit 8.

In accordance with this, after end of imaging, an image acquired by extracting a gazing area from a captured image can be easily generated through editing or the like on the basis of the recorded information of the gazing area Aa. In addition, since a captured image itself is recorded, compared to a case in which an extraction image acquired by extracting a gazing area from the captured image is recorded, the risk at the time of a failure in detection of a gazing point at the time of imaging is reduced as well.

In addition, the control unit 50 performs display control relating to a through image of a captured image acquired by the camera unit 4 as control relating to imaging.

More specifically, in a case in which a gazing area Aa is present inside of a captured image, the control unit 50 performs control such that an extraction image acquired by extracting the gazing area Aa from the captured image is displayed as a through image.

For example, as illustrated in Fig. 4A, in accordance with checking that a gazing area Aa is present inside of a captured image, the control unit 50, as illustrated in Fig. 4B, performs control such that an extraction image acquired by extracting the gazing area Aa from the captured image is displayed on the display screen 7a as a through image. Fig. 4B illustrates an example in which an extraction image is enlarged and is displayed on the entire screen of the display screen 7a.

By displaying the extraction image on the display screen 7a as a through image as described above, a user can be allowed to check an image extracted in accordance with the information of the gazing area Aa.

In addition, by displaying an extraction image in an enlarged scale, the visibility of the extraction image can be improved.

Here, in a state in which extraction display of the gazing area Aa described above is performed, in a case in which a user has viewed the display screen 7a for a predetermined time or more, the control unit 50 cancels the extraction display. In other words, the display unit 7 is caused to display an entire captured image such that the entire captured image enters the display screen 7a. At this time, it is preferable that a frame representing the range of the gazing area Aa be displayed on the display screen 7a.

The judgment of whether or not a user has viewed the display screen 7a for a predetermined time or more, for example, can be performed on the basis of a result of estimation of the visual line direction of the user that is acquired by the visual line/eye position estimating unit 6.

Here, in a case in which "imaging while doing" is premised, in a case in which a user has viewed the display screen 7a for a predetermined time or more during extraction display, a user can be estimated to have anxiety about being able to continuously perceive an object desired to be an imaging target. Thus, in a case in which the user has viewed the display screen 7a for a predetermined time or more as described above, by switching from the extraction display to display of the entire captured image, a user is allowed to check a position of an object desired to be an imaging target within the imaging range. In accordance with this, the anxiety of the user can be resolved.

In addition, in a case in which the gazing area Aa becomes close to be within a predetermined distance from an end part of the captured image, the control unit 50 performs control such that notification information is displayed to the user. This can be paraphrased as control in which, in accordance with an object at which the user is gazing (a gazing object) being about to be out of the frame, the indication thereof is notified to the user.

Fig. 5 illustrates an example in which, in accordance with a gazing object being close to a lower left end of the imaging range in accordance with a change in the relative positional relation between a user's gazing object and the imaging range of the camera unit 4, the gazing area Aa becomes close to the lower left end of the captured image.

In a case in which the gazing area Aa becomes close to an end of the captured image, as illustrated in Fig. 6A, the control unit 50 cancels extraction display as illustrated in Fig. 6B from a state in which the extraction display of the gazing area Aa is being performed and performs control such that the entire captured image is displayed on the display screen 7a.

In addition, together with this, the control unit 50 displays a message image M1 used for notifying that the gazing object is about to be out of the frame on the display screen 7a. Furthermore, in the case of this example, the control unit 50 displays an area range Wa representing the range of the gazing area Aa on the display screen 7a.

In addition, in a case in which the gazing point is not present inside of the captured image, the control unit 50 performs control to display a specific image. More specifically, in this example, in a case in which no gazing point is present inside of the captured image, the control unit 50 performs control such that, for example, a message image M2 as illustrated in Fig. 7 and a direction notification image I1 are displayed on the display screen 7a. The message image M2 is an image including message information used for at least notifying a user that a gazing object is out of the frame from an imaging range.

In addition, the direction notification image I1 is an image used for notifying a user of a frame-out direction of a gazing object, and an example in which it is an image including an arrow representing a frame-out direction of a gazing object is illustrated in the drawing. In this example, in the message image M2, message information for notifying that a gazing object is out of the frame in a direction represented by then arrow of the direction notification image I1 is included.

In addition, a notification indicating that a gazing object is about to be out of the frame and a notification indicating being out of the frame are not limited to notifications using visual information as illustrated above as an example, and, for example, a notification using a sound (auditory information) and a notification using tactile information such as a vibration or the like can be considered to be performed.

Furthermore, a notification of a frame-out direction is not limited to a notification using visual information like the direction notification image I1, and a notification using auditory information or tactile information can be considered to be performed.

In addition, the control unit 50 performs control relating to switching of a gazing object. In other words, the control unit 50 estimates whether or not a gazing point has been moved to another object on the basis of gazing point detecting results of a plurality of number of times performed by the gazing point detecting unit 52 and, in a case in which it is estimated that the gazing point has been moved to another object, performs a switching process in which a gazing area Aa based on the gazing point that has been newly detected by the gazing point detecting unit is applied as a gazing area Aa used in control relating to imaging.

In the first embodiment, the estimation of whether or not a gazing point has been moved to another object is performed, in a case in which a new three-dimensional gazing point Pr has been detected, as judgment of whether or not this new three-dimensional gazing point Pr is separate from a three-dimensional gazing point Pr that was previously applied by a predetermined distance or more. In the first embodiment, since an object detecting process is not performed for a captured image, an object at which the three-dimensional gazing point Pr is present cannot be identified, and thus, for example, by using such a technique, it is estimated whether or not a gazing point has been moved to another object.

Here, in this example, in a case in which it is only estimated that the gazing point has been moved to another object in the estimation process described above, the control unit 50 does not perform a switching process. More specifically, when it being estimated that the gazing point has been moved to another object is set as a first condition, the control unit 50 performs a switching process in a case in which the first condition and a second condition different from the first condition are satisfied.

Here, as the second condition, a condition that a state in which the gazing point is estimated to be present at another object has lasted for a predetermined time or more may be considered to be set.

In this case, in a case in which it is estimated that the three-dimensional gazing point Pr has been moved to another object through the estimation process described above, the three-dimensional gazing point Pr detected at a timing of this estimation is used as a reference gazing point, and the control unit 50 judges whether or not a state in which a three-dimensional gazing point Pr detected thereafter is within the range of a predetermined distance from the reference gazing point has lasted for a predetermined time or more. For example, by using such judgment, it can be judged whether or not a state in which the gazing point is estimated to be present at another object has lasted for a predetermined time or more.

Then, in accordance with judgment of the state in which the gazing point is estimated to be present at another object having lasted for the predetermined time or more, the switching process described above is performed.

Alternatively, as the second condition, a condition that the imaging direction is directed in a direction in which another object is present may be considered to be set.

In this case, in a case in which it is estimated that the three-dimensional gazing point Pr has been moved to another object through the estimation process described above, for example, on the basis of the information of a self-position and a posture of the information processing device 1 estimated by the self-position/posture estimating unit 2, the control unit 50 judges whether or not the imaging direction of the camera unit 4 is directed in a direction in which another object is present and performs the switching process described above in accordance with acquisition of a positive result through this judgment.

In addition, the control unit 50 also performs the following control in switching of a gazing area Aa of a case in which the gazing point is estimated to be present at another object.

In other words, when switching to the gazing area Aa of another object is performed, the control unit 50 performs control of changing at least one of the position and the size of the gazing area Aa in a stepped manner.

An example of a stepwise change control of such a gazing area Aa will be described with reference to Figs. 8 and 9.

Fig. 8 is an explanatory diagram of a first example of stepwise change control of the gazing area Aa.

Here, a gazing object of a switching source will be denoted as an object Ob1, and a gazing object of a switching destination will be denoted as an object Ob2.

In this case, as illustrated as a transition from Fig. 8A to Fig. 8C, the control unit 50 changes the position of the gazing area Aa from the gazing area Aa set to the object Ob1 of the switching source to the position of the gazing area Aa corresponding to the object Ob2 of the switching destination in a stepped manner. In this stepwise position changing process for the gazing area Aa, the size of the gazing area Aa may be unchanged or may be changed.

Fig. 9 is an explanatory diagram of a second example of stepwise change control of the gazing area Aa.

In this case, as illustrated as a transition from Fig. 9A to Fig. 9C, the control unit 50 enlarges the size of the gazing area Aa to a size including both the object Ob1 of the switching source and the object Ob2 of the switching destination once and then changes the size to a gazing area Aa corresponding to the object Ob2 of the switching destination.

In the first embodiment, as illustrated in Fig. 9B, as the size of the gazing area Aa including both the object Ob1 and the object Ob2, a size at least including a gazing point applied immediately before satisfaction of the first condition described above and a gazing point detected at a detection timing of a gazing point corresponding to a timing at which both the first and second conditions are satisfied may be set.

In addition, for confirmation, the size of the gazing area Aa corresponding to the object Ob2 illustrated in Fig. 9C is a size based on information of a composition selected by a user in advance in this example.

As illustrated in the first example and the second example described above, in performing switching to the gazing area Aa of another object, by changing at least one of the position and the size of the gazing area Aa in a stepped manner, prevention of rapid change of the gazing area can be achieved.

Thus, in a case in which an extraction image acquired by extracting a gazing area from a captured image is provided for a user, prevention of rapid change of image details of this extraction image can be achieved, and alleviation of a strange feeling of a case in which this gazing image is displayed can be achieved.

In addition, the control unit 50 reflects switching to the gazing area Aa of the other object as described above also in the display image of the display unit 7. Fig. 10 is a diagram for describing an example of a display transition at the time of switching to a gazing area Aa of another object. Here, although an example premised on a case in which the position of the gazing area Aa is changed in a stepped manner as illustrated in Fig. 8 will be described, the conversion can be reflected in display similarly also in a case in which the size is changed in a stepped manner as illustrated in Fig. 9.

First, in a state in which the first condition and the second condition described above are not satisfied, the gazing area Aa is set in correspondence with the object Ob1 of the switching source. As described above, in this example, in a case in which the gazing area Aa is set, an extraction image of the gazing area Aa is displayed, and thus, in a state in which the first condition and the second condition are not satisfied, as illustrated in Fig. 10A, an extraction image of the gazing area Aa corresponding to the object Ob1 is displayed on the display screen 7a.

Then, in a case in which both the first condition and the second condition are satisfied, the control unit 50 cancels the extraction display of the gazing area Aa, in other words, sets the display state of the entire captured image and displays an area range Wa representing the gazing area Aa corresponding to the object Ob1 to be superimpose on the captured image as illustrated in Fig. 10B.

Thereafter, the control unit 50 causes the display position of the area range Wa on the display screen 7a (on the captured image) to perform transition to be the same position transition as the position transition of the gazing area Aa described with reference to Fig. 8 (see a transition from Fig. 10B to Fig. 10D). In accordance with completion of the transition of the display position of such an area range Wa, as illustrated in Fig. 10E, an extraction image of the gazing area Aa at the time of completion of the transition is displayed on the display screen 7a.

### (1-3. Processing Procedure)

An example of a specific processing procedure for realizing the imaging control technique according to the first embodiment described above will be described with reference to flowcharts illustrated in Figs. 11 to 13.

In addition, the processes illustrated in these Figs. 11 to 13 are executed by a CPU of the arithmetic operation unit 5 on the basis of a program stored in a predetermined storage device, for example, such as a ROM of the arithmetic operation unit 5, the memory unit 8, or the like. Hereinafter, a subject of execution of the processes will be denoted as the arithmetic operation unit 5.

Fig. 11 is a flowchart illustrating a process relating to recording of a captured image. Here, a captured image is a moving image, and a case in which a moving image is recorded will be described.

First, the arithmetic operation unit 5 waits for satisfaction of a startup condition of an application in Step S101. The application (an application program) described here is an application for realizing the imaging control technique according to the first embodiment described above, and the arithmetic operation unit 5 waits until a startup condition of the application set in advance such as a startup operation of this application or the like is satisfied in Step S101.

In a case in which it is judged that the startup condition of the application is satisfied in Step S101, the arithmetic operation unit 5 causes the process to proceed to Step S102 and performs start of distance measurement and the process of estimating the self-position/posture and the visual line/eye position.

In other words, the process is a process of starting distance measurement (generation of a distance image in this example) using the distance measuring unit 3, estimation of the self-position and the posture of the information processing device 1 using the self-position/posture estimating unit 2, and estimation of the visual line and the eye positions of the user using the visual line/eye position estimating unit 6.

In Step S103 following Step S102, the arithmetic operation unit 5 executes a gazing point detecting/setting process. The gazing point detecting/setting process of this Step S103 is a process of performing detection of a three-dimensional gazing point Pr and setting of a three-dimensional gazing point Pr applied to control relating to imaging.

Fig. 12 is a flowchart illustrating the gazing point detecting/setting process of Step S103.

First, the arithmetic operation unit 5 generates a three-dimensional map on the basis of distance measurement information and information of a self-position and a posture in Step S150. In other words, a three-dimensional map is generated using the technique described above on the basis of the distance measurement information (a distance image) acquired by the distance measuring unit 3 and the information of a self-position and a posture of the information processing device 1 acquired by the self-position/posture estimating unit 2.

In Step S151 following Step S150, the arithmetic operation unit 5 executes a three-dimensional gazing point detecting process on the basis of information of the three-dimensional map, the visual line vector, and the eye positions. In other words, an intersection with a visual line of a user on a three-dimensional map is detected as a three-dimensional gazing point Pr on the basis of the three-dimensional map generated in Step S150, the information of a self-position and a posture of the information processing device 1 estimated by the self-position/posture estimating unit 2, and the information of a visual line and eye positions of the user estimated by the visual line/eye position estimating unit 6.

In Step S152 following Step S151, the arithmetic operation unit 5 judges whether or not a gazing point has been detected. In other words, it is judged whether or not a three-dimensional gazing point Pr has been detected through the detection process of Step S151.

In a case in which it is judged that a gazing point has been detected in Step S152, the arithmetic operation unit 5 causes the process to proceed to Step S153 and judges whether or not it becomes farther from a set gazing point of the previous time.

Here, the set gazing point represents a three-dimensional gazing point Pr applied to control relating to imaging. The reason for distinguishing between the detected three-dimensional gazing point Pr and the set gazing point, in this example, is that the detected three-dimensional gazing point Pr needs not to be set as a gazing point that is immediately applied to control relating to imaging. For example, since the position of the gazing area Aa is stepwise changed at the time of switching the gazing area Aa described above, a state in which a gazing point needs to be set as a gazing point different from a detected gazing point occurs. For this reason, in this example, as a set gazing point, a gazing point applied to control relating to imaging can be set to a gazing point different from a detected gazing point (see Steps S154, S156, S159, and the like).

In Step S153, it is judged whether or not the three-dimensional gazing point Pr detected in the process of Step S151 of this time is separated from the set gazing point of the previous time by a predetermined distance or more. This corresponds to performing judgment of satisfaction of the first condition relating to switching to the gazing area Aa of the other object described above.

In Step S153, in a case in which a judgment result in which the three-dimensional gazing point Pr detected in the process of Step S151 of this time is not separated from the set gazing point of the previous time by a predetermined distance or more and has not been separated away from the set gazing point of the previous time is acquired, the arithmetic operation unit 5 causes the process to proceed to Step S154 and sets the detected gazing point as a gazing point of this time. In other words, as a set gazing point of this time, the three-dimensional gazing point Pr detected in the process of Step S151 of this time is set.

In a case in which the process of Step S154 is executed, the arithmetic operation unit 5 ends the gazing point detecting/setting process of Step S103.

In addition, in the previous Step S152, in a case in which it is judged that no gazing point has been detected, the arithmetic operation unit 5 causes the process to proceed to Step S155 and judges whether or not the gazing point non-detection state is continued for a predetermined time or more. In the process of Step S151, it is judged that the state in which the three-dimensional gazing point Pr has not been continuously detected has lasted for a predetermined time or more.

In Step S155, in a case in which it is judged that the gazing point non-detection state has not been continued for a predetermined time or more, the arithmetic operation unit 5 causes the process to proceed to Step S156 and sets the set gazing point of the previous time as a gazing point of this time. In accordance with this, even when a gazing point has not been detected due to a certain factor, for example, such as a failure in estimation of a visual line and eye positions of a user or the like, in a case in which the state is instantaneous, the set gazing point of the previous time is handed over, and frequent switching between a state in which a gazing point is set and a non-setting state in response to a gazing point being instantaneously lost can be prevented.

In a case in which the process of Step S156 is executed, the arithmetic operation unit 5 ends the gazing point detecting/setting process of Step S103.

On the other hand, in Step S155, in a case in which it is judged that the gazing point non-detection state has been continued for a predetermined time or more, the arithmetic operation unit 5 causes the process to proceed to Step S157, sets no-presence of the gazing point, and ends the gazing point detecting/setting process of Step S103.

In addition, in the previous Step S153, in a case in which it is judged that it has been separated away from the set gazing point of the previous time (in a case in which the first condition of the switching is satisfied), the arithmetic operation unit 5 causes the process to proceed to Step S158 and judges whether or not the gazing point switching condition is satisfied. In other words, it is judged whether or not the second condition described above is satisfied. More specifically, in this example, it is judged whether or not a state in which a gazing point is estimated to be present at another object has lasted for a predetermined time or more, or the imaging direction of the camera unit 4 is directed in a direction in which another object is present.

In Step S158, in a case in which it is judged that the gazing point switching condition is not satisfied, the arithmetic operation unit 5 causes the process to proceed to Step S159, sets the set gazing point of the previous time as a gazing point of this time, and ends the gazing point detecting/setting process of Step S103. In other words, in this case, switching to the gazing area Aa of another object is not performed.

On the other hand, in Step S158, in a case in which it is judged that the gazing point switching condition is not satisfied, the arithmetic operation unit 5 causes the process to proceed to Step S160 and executes a gazing point switching process. In other words, a process of stepwise changing the position of the three-dimensional gazing point Pr from the position of the set gazing point of the current state to the position of the three-dimensional gazing point Pr detected in the process of Step S151 of this time is performed such that the position and the size of the gazing area Aa are changed in a stepped manner in the form described with reference to Figs. 8 and 9 described above. At this time, every time the three-dimensional gazing point Pr is changed, the arithmetic operation unit 5 sets the three-dimensional gazing point Pr after change as a set gazing point. When the three-dimensional gazing point Pr is set, after a gazing area Aa based on the three-dimensional gazing point Pr is set in Step S114 (Fig. 11) to be described below, gazing area information representing this gazing area Aa is recorded in the memory unit 8 in Step S115.

In accordance with execution of the process of Step S160, the arithmetic operation unit 5 ends the gazing point detecting/setting process of Step S103.

The description is returned to Fig. 11.

In accordance with execution of the gazing point detecting/setting process of Step S103, the arithmetic operation unit 5 causes the process to proceed to Step S104. In Step S104, the arithmetic operation unit 5 judges whether or not a recording flag is on. The recording flag is a flag that represents a recording status for a captured image (a moving image in this example) acquired using the camera unit 4, on represents recording, and off represents non-recording. The recording flag becomes on in accordance with start of recording in Step S109 to be described below.

By providing the process of this Step S104, the gazing area Aa can be set in a state before start of recording, and the extraction image of the gazing area Aa can be displayed on the display screen 7a before start of recording, and the area range Wa representing the gazing area Aa can be displayed.

In Step S104, in a case in which it is judged that the recording flag is not on, the arithmetic operation unit 5 causes the process to proceed to Step S105.

In accordance with the processes of Steps S105 to S108, the arithmetic operation unit 5 is configured to wait for any one of start of a next frame, start of recording, end of recording, and end of the application. A frame here represents a frame of a captured image.

More specifically, in Step S105, the arithmetic operation unit 5 judges start of a next frame or not and, in a case in which non-start of a next frame is judged, judges start of recording or not, in other words, for example, whether or not a predetermined condition such as a recording start operation of a user or the like is satisfied in Step S106. In a case in which non-start of recording is judged in Step S106, the arithmetic operation unit 5 causes the process to proceed to Step S107, judges end of recording or not, in other words, for example, whether or not a predetermined condition such as a recording end operation of a user is satisfied, in a case in which non-end of recording is judged, causes the process to proceed to Step S108, and judges end of the application or not, in other words, whether or not a predetermined condition such as an end operation of the application is satisfied. In a case in which non-end of the application is judged, the arithmetic operation unit 5 causes the process to return to Step S105.

In a case in which start of recording is judged in Step S106, the arithmetic operation unit 5 causes the process to proceed to Step S109, sets the recording flag to on, and performs a process for start of recording of the captured image in the following Step S110. In other words, the arithmetic operation unit 5 starts recording of the captured image as a moving image acquired by the camera unit 4 in the memory unit 8.

In accordance with execution of the recording start process of this Step S110, the arithmetic operation unit 5 causes the process to return to Step S105.

In addition, in a case in which end of recording is judged in Step S107, the arithmetic operation unit 5 causes the process to proceed to Step S111, executes a process for ending recording of the captured image, that is, a process of ending recording of the captured image that has started in Step S110, then sets the recording flag to off in Step S112, and causes the process to return to Step S105.

In a case in which start of a next frame is judged in Step S105, the arithmetic operation unit 5 causes the process to return to Step S103. In accordance with this, the gazing point detecting/setting process of Step S103 is performed for each frame.

In addition, in a case in which it is judged that the recording flag is on in the previous Step S104, the arithmetic operation unit 5 causes the process to proceed to Step S113 and judges whether or not a gazing point has been set. In other words, in accordance with the gazing point detecting/setting process of Step S103, it is judged whether or not the three-dimensional gazing point Pr has been set.

In a case in which it is judged that the gazing point has been set in Step S113, the arithmetic operation unit 5 causes the process to proceed to Step S114 and sets the gazing area Aa. In other words, as described as the gazing area setting unit 54, a process in which the set three-dimensional gazing point Pr is converted into an on-image gazing point Pi on the basis of the on-image gazing point Pi, and a gazing area Aa according to a composition selected by user is set is performed.

In Step S115 following Step S114, the arithmetic operation unit 5 performs a process of recording gazing area information. In other words, a process of recording information representing the gazing area Aa set in Step S114, more specifically, for example, center coordinates and range information of the gazing area Aa in the memory unit 8 is performed.

In accordance with this, during recording, gazing area information representing the gazing area Aa is recorded in the memory unit 8 together with the captured image.

In accordance with execution of the process of Step S115, the arithmetic operation unit 5 causes the process to return to Step S105. In accordance with this, in a state in which recording is continued, when a gazing point is set by performing the gazing point detecting/setting process of Step S103 for each frame, by performing processes of Steps S114 and S115, information of the gazing area Aa corresponding to the set gazing point can be configured to be recorded as information of the gazing area Aa corresponding to the frame.

On the other hand, in a case in which it is judged that no gazing point has not been set in Step S113, the arithmetic operation unit 5 passes the processes of Steps S114 and S115 and causes the process to return to Step S105.

In accordance with this, in a state in which recording is continued, for a frame in which no gazing point has been set, information of the gazing area Aa is not recorded.

In accordance with judgment of the end of the application in the previous Step S108, the arithmetic operation unit 5 ends the series of processes illustrated in Fig. 11.

Fig. 13 is a flowchart of a process relating to display of a captured image. During the startup of the application, the arithmetic operation unit 5 executes processes illustrated in Fig. 13 in parallel with the processes illustrated in Fig. 11.

In Fig. 13, the arithmetic operation unit 5 waits until a gazing point is set in Step S201. In other words, the arithmetic operation unit 5 waits until a three-dimensional gazing point Pr is set using the gazing point detecting/setting process of Step S103 in Fig. 11.

In a case in which it is judged that a gazing point has been set in Step S201, the arithmetic operation unit 5 causes the process to proceed to Step S202 and performs extraction display of the gazing area Aa. In other words, in accordance with setting of a gazing point, as illustrated in Fig. 4 above, extraction display of the gazing area Aa is performed on the display screen 7a.

In addition, in Step S202, in a case in which it is currently during recording, and a setting process for the gazing area Aa is performed in Step S114 illustrated in Fig. 11, information of the gazing area Aa set in this setting process can be used. In a currently non-recording state, in Step S202, a process of setting the gazing area Aa on the basis of the information of the set three-dimensional gazing point Pr is performed.

In accordance with execution of the extraction display process of Step S202, the arithmetic operation unit 5 causes the process to proceed to Step S203.

In accordance with the processes of Steps S205 to S206 in the drawing, the arithmetic operation unit 5 waits until any one of a state in which the gazing area Aa comes close to an end of the captured image, a state in which a user has viewed the screen for a predetermined time or more, and a state in which a gazing point has been switched, and a state in which the application has ended is formed.

More specifically, the arithmetic operation unit 5 performs a process of judging whether or not the gazing area Aa comes close to an end of a captured image, in other words, whether or not the gazing area Aa comes close to an end of the captured image to be within a predetermined distance as described above in Step S203 and, in a case in which it is judged that the gazing area Aa has not come close to an end of the captured image, causes the process to proceed to Step S204, and performs a process of judging whether or not the user has viewed the screen for a predetermined time or more, in other words, whether or not the user has viewed the display screen 7a for a predetermined time or more on the basis of the information of the visual line direction of the user estimated by the visual line/eye position estimating unit 6 as described above. In addition, in a case in which it is judged that the user has not viewed the screen for a predetermined time or more in Step S204, the arithmetic operation unit 5 causes the process to proceed to Step S205, judges whether or not the gazing point has been switched, in other words, whether or not it is judged that the gazing point switching condition is satisfied in Step S158 illustrated in Fig. 12 above, and, in a case in which it is judged that the gazing point has not been switched, causes the process to proceed to Step S206, and judges whether or not the application has ended.

In a case in which it is judged that the application has ended in Step S206, the arithmetic operation unit 5 causes the process to return to Step S203.

In a case in which it is judged that the gazing area Aa comes close to an end of the captured image in Step S203, the arithmetic operation unit 5 causes the process to proceed to Step S207, cancels the extraction display, and performs a process for displaying the frame of the gazing area Aa. In other words, the arithmetic operation unit 5 cancels the extraction display of the gazing area Aa that has been started in Step S202 such that the entire captured image is displayed on the display screen 7a and displays the area range Wa to be superimposed onto this captured image (see Fig. 6). At this time, as the area range Wa, an area range Wa representing the gazing area Aa set on the basis of the three-dimensional gazing point Pr that is currently being set is displayed.

Then, the arithmetic operation unit 5 gives a frame-out warning notification in Step S208 following Step S207. In other words, a process of displaying the message image M1 as illustrated in Fig. 6B at least on the display screen 7a is performed. In addition, as the warning notification of Step S208, a notification using a technique other than screen display such as a sound or a vibration may be performed as well.

In Step S209 following Step S208, the arithmetic operation unit 5 judges whether or not the gazing point has not been set. In other words, it is judged whether or not the three-dimensional gazing point Pr is in an unset state by executing Step S157 illustrated in Fig. 12 above.

In a case in which it is judged that the gazing point is not in the unset state in Step S209, the arithmetic operation unit 5 causes the process to proceed to Step S210 and judges whether or not the extraction display condition is satisfied. As the extraction display condition here, for example, a condition such as a distance from the gazing area Aa to an end of a captured image being returned to a predetermined distance or more or the like may be considered to be set.

In a case in which it is judged that the extraction display condition is not satisfied in Step S210, the arithmetic operation unit 5 causes the process to return to Step S208. In accordance with this, until the extraction display condition such as a distance to an end of a captured image of the gazing area Aa being returned to a predetermined distance or more is satisfied, as long as a gazing object is not out of the frame, and it is not judged that the gazing point is unset in Step S209, the state in which the extraction display is canceled is continued, and a frame-out warning notification is continuously performed.

On the other hand, in a case in which it is judged that the extraction display condition is satisfied in Step S210, the arithmetic operation unit 5 causes the process to return to the previous Step S202. In other words, in a case in which the extraction display condition of Step S210 is satisfied, the display state is returned to the extraction display state of the gazing area Aa.

In addition, in a case in which it is judged that the gazing point is unset in Step S209, the arithmetic operation unit 5 causes the process to proceed to Step S211 and executes a frame-out display process. In other words, the process of displaying the message image M2 and the direction notification image I1 as illustrated in Fig. 7 above on the display screen 7a is performed.

In accordance with execution of the frame-out display process of Step S211, the arithmetic operation unit 5 causes the process to return to Step S201. In accordance with this, after the gazing object becomes out of the frame, and the gazing point becomes an unset state, the process waits until a gazing point is newly set.

In addition, in a case in which it is judged that the user has viewed the screen for a predetermined time or more in Step S204 described above, the arithmetic operation unit 5 causes the process to proceed to Step S212 and cancels the extraction display.

Then, in Step S213 following Step S212, the arithmetic operation unit 5 waits until the extraction display condition is satisfied. As the extraction display condition of this Step S213, for example, a condition of a state in which the user does not view the display screen 7a being formed may be considered to be set.

In a case in which it is judged that the extraction display condition is satisfied in Step S213, the arithmetic operation unit 5 causes the process to return to Step S202.

In addition, in a case in which gazing point switching is judged in Step S205, the arithmetic operation unit 5 causes the process to proceed to Step S214 and cancels the extraction display. In accordance with this, as illustrated as a transition from Fig. 10A to 10B described above, in correspondence with a case in which a state in which switching to a gazing area Aa of another object needs to be performed is formed, the display of the display screen 7a can be switched from the extraction display state of the gazing area Aa to display of the entire captured image.

In Step S215 following Step S214, the arithmetic operation unit 5 executes a switching display process. In other words, as illustrated in Fig. 10 described above, the switching display process is a process of changing the position of the area range Wa in a stepped manner. More specifically, the arithmetic operation unit 5 performs the process of changing the position of the area range Wa from a position corresponding to the gazing point set immediately before satisfaction of the first condition described above (the condition of Step S153 illustrated in Fig. 12) to a position corresponding to the detection gazing point at a timing at which both the first and second conditions are satisfied (a condition satisfaction timing of Step S158 illustrated in Fig. 12) in a stepped manner. In addition, in a case in which the size of the area range Wa is changed in a stepped manner, by using a technique similar to that illustrated in Fig. 9, the size of the area range Wa is changed in a stepped manner.

In accordance with execution of the switching display process of Step S215, the arithmetic operation unit 5 causes the process to return to Step S202. In a case in which the switching display process of Step S215 is completed in accordance with this, in other words, in accordance with change of the area range Wa to a state of a final stage, as illustrated in Fig. 10E above, the extraction image of the gazing area Aa is displayed on the display screen 7a.

In accordance with judgment of the end of the application in Step S206, the arithmetic operation unit 5 ends the series of processes illustrated in Fig. 13.

Here, according to the process described above, the gazing point is detected for each frame, and thus, even when the imaging range is changed due to camera shake or the like, the gazing area Aa can be configured not to be blurred.

In addition, in this embodiment, since the gazing area Aa is set using the gazing point as a reference, the gazing area Aa can follow the movement of a gazing object, and a composition selected by the user can be maintained at that time as the composition.

In addition, in the description presented above, although an example in which an extraction image of the gazing area Aa is displayed in accordance with setting of a gazing point has been described, the display of the extraction image is not essential.

For example, in a case in which a gazing point is set, while the entire captured image is displayed on the display screen 7a, an area range Wa may be considered to be displayed with being superimposed onto this captured image.

In addition, in a case in which the entire captured image is displayed even when the gazing point is set in this way, when switching to a gazing area Aa of another object is performed, an area range Wa representing the gazing area Aa after switching may be considered to be displayed on the display screen 7a. At this time, the area range Wa representing the gazing area Aa after switching may be caused to be noticeable, for example, by blinking the gazing area or the like.

In addition, in the description present above, although an example in which the gazing area Aa is set using a single gazing point as a reference has been described, the gazing area Aa may be also considered to be set as an area including an area in which a detection frequency of a gazing point is high using results of detection of gazing points in the past.

Furthermore, in the first embodiment, an object detecting process is not executed, and thus a range (a size) of an object at which the user gazes cannot be identified. Thus, in the first embodiment, in a case in which the camera unit 4 has a zoom function, the size of the gazing area Aa may be considered to be changed in accordance with a zoom operation.

In addition, in the description presented above, although an example, in which, in a case in which a gazing point is estimated to have moved on another object, switching of the gazing area Aa is automatically performed in accordance with satisfaction of the first and second conditions described above has been described, for example, message information for asking a user about whether or not switching to a gazing area Aa of another object is performed in accordance with satisfaction of the first and second conditions may be notified, for example, through image display or the like, and switching to the gazing area Aa of another object may be performed in accordance with a user operation for this notification. As a user operation of this case, for example, a touch operation for the display screen 7a, a speech input operation, or the like may be considered to be performed.

At this time, in a case in which a user operation is not performed even when a predetermined time or more has elapsed for the notification described above, switching may be considered to be automatically performed. Alternatively, a gazing area Aa that objects of both a switching source and a switching destination enter may be considered to be set. Alternatively, switching may be considered not to be performed.

Furthermore, in the description presented above, although a process corresponding to a case in which a moving image is recorded has been described, in the case of still image recording, for example, in accordance with a release operation (for example, an operation of a shutter button), a gazing area Aa is set from the gazing point detected at the timing of this release operation, and information of the set gazing area Aa may be recorded in the memory unit 8 together with a captured image as a still image acquired at the timing at which the release operation was performed.

In addition, in the description presented above, although a case in which the information of a gazing area Aa is recorded together with a captured image has been illustrated, an image acquired by extracting the gazing area Aa may be recorded.

For example, an image acquired by trimming a gazing area Aa from a captured image may be considered to be recorded as an extraction image.

Alternatively, in a case in which a camera unit 4 as a so-called PTZ camera capable of optical zooming using a zoom lens and capable of adjustment of pan/tilt is used, an extraction image acquired by extracting a gazing area Aa through optical zooming, pan, and tilt is acquired, and this extraction image may be considered to be recorded.

### <2. Second Embodiment>

A second embodiment will be described below. In the second embodiment, by performing an object detecting process, a range of a gazing object can be identified.

Fig. 14 is a block diagram illustrating a configuration example of an information processing device 1A according to the second embodiment.

In the following description, parts similar to those in the foregoing description will be denoted by the same reference numerals and step numbers, and the description thereof is omitted.

In the information processing device 1A, a difference from the information processing device 1 according to the first embodiment is that an arithmetic operation unit 5A is disposed in place of the arithmetic operation unit 5. The arithmetic operation unit 5A is different from the arithmetic operation unit 5 that an object detecting unit 55 is added, and a gazing area setting unit 54A is disposed in place of the gazing area setting unit 54.

The object detecting unit 55 performs an object detecting process on the basis of a captured image acquired using a camera unit 4. As this object detecting process, presence/absence of an object and a range of the object are identified. For example, as the object detecting unit 55, an artificial intelligence model that has machine learning may be considered to be used. As this artificial intelligence model, for example, a learning model that has learned such that presence/absence and a range of an object as a target can be identified through deep learning is used.

In addition, it is not essential to use an artificial intelligence model in the object detecting unit 55, and a configuration in which object detection is performed in a rule-based process, for example, such as template matching or the like may be considered to be employed.

The gazing area setting unit 54A identifies an object including a gazing point as a gazing object on the basis of the gazing point (a three-dimensional gazing point Pr) detected by a gazing point detecting unit 52 and information of an object (information representing a detected object and a range thereof) detected by the object detecting unit 55 and sets an area including the gazing object as a gazing area Aa.

Also in this case, the setting of the gazing area Aa is performed on the basis of information of a composition selected through a user operation. For example, a gazing area Aa is set using a technique similar to that illustrated in Fig. 3 above, for example, using a representative position of the gazing object (for example, a center position of the object range or the like) as a reference.

By performing the object detecting process, a range and a center position of a gazing object can be acquired, and thus a gazing area Aa can be set such that a part of the gazing object does not protrude therefrom.

Here, in a case in which a part of the gazing object protrudes from a captured image, the gazing area setting unit 54A sets the gazing area Aa such that the entire part that does not protrude enters the gazing area.

Fig. 15 is a flowchart illustrating an example of a specific processing procedure of a process relating to recording of a captured image to be executed by an arithmetic operation unit 5 in correspondence with a case in which the object detecting unit 55 and the gazing area setting unit 54A as described above are disposed.

The process illustrated in this Fig. 15 is different from the process illustrated in Fig. 11 above that an object detecting process of Step S301 and a gazing area setting process of Step S302 are performed in place of the gazing area setting process of Step S114, and a gazing point detecting/setting process of Step S103' is performed in place of the gazing point detecting/setting process of Step S103.

The object detecting process of Step S301 is the process described as the object detecting unit 55 described above, and duplicate description will be avoided.

In the gazing area setting process of Step S302 following Step S301, the arithmetic operation unit 5 sets a gazing area Aa on the basis of a result of the object detecting process of Step S301. More specifically, the three-dimensional gazing point Pr set in the gazing point detecting/setting process of Step S103' (details will be described below) is converted into an on-image gazing point Pi, and an object including this on-image gazing point Pi among objects detected in the object detecting process of Step S301 is identified as a gazing object. Then, a gazing area Aa according to a composition selected by a user is set using a representative position such as a center position or the like of a gazing object as a reference.

In accordance with setting of the gazing area Aa in Step S302, the arithmetic operation unit 5 causes the process to proceed to the process of Step S115.

Fig. 16 is a flowchart illustrating the gazing point detecting/setting process of Step S103'.

A difference from the gazing point detecting/setting process of Step S103 illustrated in Fig. 12 is that the process of Step S401 is performed in place of the process of Step S153.

In Step S401, the arithmetic operation unit 5 judges whether or not a detected gazing point is on another object different from the gazing object. In other words, judgment of an execution condition of a switching process is performed not on a gazing point base but on an object range base.

In accordance with this, it can be appropriately judged whether or not a gazing point of the user has moved to another object.

The process relating to display control is similar to that illustrated in Fig. 13 also in this case, and thus duplicate description will be avoided.

Here, also in the second embodiment, although a notification is performed in a case in which a gazing object is about to be out of the frame from a captured image, in the second embodiment, not only the gazing object but also another object can be detected, and thus a notification for the user utilizing such a feature may be considered to be performed.

For example, gazing history information representing the number of times of gazing is generated for each detected object, and, on the basis of this gazing history information, in a case in which an object that has been gazed at previously or an object having a possibility of being gazed thereat again is about to be out of the frame from a captured image, a notification may be considered to be given to the user.

### <3. Modified Example>

As above, although the embodiments relating to the present technology have been described, the present technology is not limited to the specific examples described above, and configuration as various modified examples may be employed.

For example, as a modified example, a configuration in which a secondary camera having a wider angle is present in addition to a main camera as the camera unit 4 will be considered.

In this case, in a case in which a gazing object becomes out of the frame from an imaging range of the main camera, the secondary camera may be considered to be used. More specifically, in a case in which a gazing object is perceived by the secondary camera, information of the gazing area Aa is recorded together with a captured image acquired by the secondary camera or the like.

In addition, as screen display of a case in which a secondary camera is used, a configuration in which an image of a main camera is displayed at the center of the screen, an image of the secondary camera is displayed on the outer side thereof, and the like may be considered. At this time, image frame information representing the imaging range of the main camera may be displayed.

In addition, both the main camera and the secondary camera may be considered to have exposure matching the gazing object.

In addition, in the description presented above, although it has been described that, in a case in which optical zooming can be performed, an extraction image may be generated through this zooming, in a case in which the camera is movable as in the case of an endoscope camera or the like, an extraction image may be considered to be generated by moving the camera.

In addition, not particularly mentioned in the description presented above, focusing, exposure adjustment, and face detection may be considered to be performed for a gazing object as a target. These are considered to be constantly performed during recording of a moving image. In addition, in a non-recording state in a still image recording mode or a moving image mode, in accordance with a user gazing at the screen and raising the information processing device 1 (1A), and the like, focusing, exposure adjustment, face detection, and the like for the gazing object as described above as a target are considered to be started.

In addition, as a countermeasure for a case in which the visual line of the user is lost, the following may be considered.

For example, even when the visual line cannot be estimated, in a case in which the direction of the head of a user can be estimated, the visual line is estimated from the direction of the head, and an object intersecting with the estimated visual line may be considered to be detected as a gazing object.

Alternatively, in a case in which the visual line has been lost, an area in which gazing points were detected with a high frequency in the past may be set as the gazing area Aa.

In addition, in a case in which the visual line has been lost, an object whose face is registered (in a case in which there are a plurality of objects whose faces are registered, an object selected therefrom) may be considered to be set as a gazing object.

In addition, in a user interface of a case in which a still image is recorded, at the time of the still image recording mode, recording of a still image is considered to be performed in accordance with a pronunciation of "shutter" or a button operation while gazing at a target object.

Furthermore, in a user interface of a case in which a moving image is recorded, at the time of the moving image recording mode, recording is considered to be started in accordance with a pronunciation of "shutter" or a button operation while gazing at a target object.

In addition, in the description until now, an example in which only one gazing point is detected has been described, a plurality of gazing points may be considered to be detected. For example, it is considered when the visual line moves between two points and the like.

In a case in which a plurality of gazing points are detected, as a gazing area Aa, a range that the plurality of gazing points enter may be considered to be set (in a case in which object detection is performed, a range that a plurality of gazing objects enter is set).

In addition, for a plurality of users, a visual line of each of the users may be considered to be able to be detected. In a case in which a gazing point is detected for each user, a gazing area Aa is considered to be separately recorded for each user.

Alternatively, a gazing area Aa that a gazing point (or a gazing object) of each user enters may be set as well.

In addition, in a case in which a captured image and information representing a gazing area Aa are recorded, the gazing area Aa may be considered to be able to be edited on an editing screen after imaging.

In addition, in the description until now, although a device form of a smartphone has been illustrated as a device form of the information processing device, as an information processing device relating to the present technology, for example, device forms other than the smartphone such as a camera, a head mount display (HMD), and the like may be employed.

Furthermore, in the description presented above, although a case in which distance measurement using the ToF system is performed by the distance measuring unit 3 has been illustrated, a system for acquiring distance measurement information is not limited to the ToF system in the present technology. For example, distance measurement may be considered to be performed using a LiDAR system, a stereo camera, single-eye simultaneous localization and mapping (SLAM), multiple-eye SLAM, and the like other than the ToF system.

Alternatively, as distance measurement, distance measurement based on an on-sensor phase detection method, an ultrasonic distance measurement, distance measurement using an electromagnetic wave radar, or the like may be considered to be performed.

In addition, in the description presented above, in acquiring distance measurement information, although it is premised that a distance measurement sensor separated from an image sensor included in the camera unit 4 is disposed, the distance measurement information is not limited to being acquired using such a separated distance measurement sensor in the present technology.

For example, distance measurement information may be considered to be acquired by generating a three-dimensional point group of a real space using a technique of structure from motion (SfM) on the basis of an RGB image. Alternatively, a configuration in which distance measurement information is acquired using an artificial intelligence model that has performed machine learning such that a distance image is reasoned from an RGB image may be considered as well.

### <4. Summary of Embodiment>

As described above, an information processing device (1, 1A) as an embodiment includes: a detection unit (the three-dimensional map generating unit 51 and the gazing point detecting unit 52) configured to detect a gazing point of a user on a real space on the basis of distance measurement information representing a distance measurement result for a predetermined range including an imaging range that is a target range of imaging on the real space as a target and estimation information of a visual line and eye positions of the user; and a control unit (50) configured to perform control relating to the imaging using information of a gazing area set on the basis of the gazing point.

According to the configuration described above, even when a user performs so-called "imaging while doing" in which imaging is performed while directly seeing an object that is a target not through a screen of the imaging device in a state in which the user is holding the imaging device to face a target object side, by performing control relating to imaging using information of a gazing area of the user using the control unit described above, a captured image appropriately perceiving a gazing object can be provided for the user.

Accordingly, an imaging control technology that is appropriate in a case in which "imaging while doing" is performed can be realized.

In addition, in the information processing device as an embodiment, the detection unit generates a three-dimensional map for the predetermined range on the basis of the distance measurement information and detects an intersection with the visual line of the user on the three-dimensional map as the gazing point.

In accordance with this, the gazing point of the user can be appropriately detected.

In addition, in the information processing device as an embodiment, a gazing area setting unit (54, 54A) setting an area including the gazing point as the gazing area is included.

In accordance with this, control relating to imaging is performed on the basis of the information of the gazing area set as an area including the gazing point. Accordingly, a captured image appropriately perceiving a gazing object can be provided for the user, and an imaging control technology that is appropriate in a case in which "imaging while doing" is performed can be realized.

Furthermore, in the information processing device (1) as an embodiment, the gazing area setting unit (54) sets an area of which positions of left, right, upper, and lower area ends are positions of a predetermined distance from the gazing point as the gazing area.

In accordance with this, a gazing area in which a gazing point is arranged at a predetermined position, for example, such as a center position of the inside of the area or the like can be set.

Accordingly, in a case in which an extraction image acquired by extracting a gazing area from a captured image is provided for a user, the composition of this extraction image can be set to an arbitrary composition.

In addition, in the information processing device (1A) as an embodiment, the gazing area setting unit (54A) identifies an object including the gazing point among objects detected in an object detecting process for the real space as a target as a gazing object and sets an area including the gazing object as the gazing area.

In accordance with this, the entire gazing object including the gazing point is included in the gazing area.

Accordingly, in a case in which an extraction image acquired by extracting a gazing area from a captured image is provided for a user, an appropriate image that the entire gazing object enters as the extraction image can be acquired.

In addition, in the information processing device as an embodiment, the gazing area setting unit sets the gazing area such that the gazing object is located at a position inside of an area designated in advance through an operation (see Fig. 3 and the like).

In accordance with this, it is possible to allow a user to set a position inside of the gazing area at which the gazing object is to be located in advance.

Accordingly, in a case in which an extraction image acquired by extracting the gazing area from a captured image is provided for a user, the composition of the extraction image can be set as an appropriate composition according to the intention of the user.

Furthermore, in the information processing device (1, 1A) as an embodiment, the control unit estimates whether or not the gazing point has been moved to another object on the basis of gazing point detection results of a plurality of number of times acquired by the detection unit and, in a case in which it is estimated that the gazing point has been moved to another object, performs a switching process in which the gazing area based on the gazing point that is newly detected by the detection unit is applied as the gazing area used for control relating to the imaging (see Fig. 12 and 16).

In accordance with this, in response to a case in which the gazing point of the user is switched to another object, control relating to imaging can be appropriately performed on the basis of the information of the gazing point after switching.

In addition, in the information processing device (1A) as an embodiment, the control unit estimates whether or not the gazing point has been moved to another object on the basis of range information of objects detected in the object detecting process for the real space as a target.

By using the range information of the object detected in the object detecting process as described above, movement of the gazing point between objects can be appropriately estimated.

Furthermore, in the information processing device (1, 1A) as an embodiment, when estimation of the gazing point having been moved to another object is set as a first condition, the control unit performs the switching process in a case in which the first condition and a second condition different from the first condition are satisfied (see Figs. 12 and 16).

In accordance with this, in a case in which the user only temporarily views another object, the switching process of the gazing area is not performed. Accordingly, in a case in which the user views another object without any intention for switching of the gazing area, for example, such as case in which the user temporarily views in a direction in which a loud sound is generated, a switching process of a gazing area performed against a user's intention can be prevented.

Furthermore, in the information processing device as an embodiment, the second condition is a condition that a state in which the gazing point is estimated to be present at another object has lasted for a predetermined time or more.

In a case in which a user views another object for a predetermined time or more, the user's interest is estimated to be moved from an original object to another object.

Thus, according to the configuration described above, the switching process of a gazing area can be appropriately performed in accordance with user's intention.

In addition, in the information processing device as an embodiment, the second condition is a condition that an imaging direction is directed in a direction in which the other object is present.

In a case in which the imaging direction is directed in a direction in which another object is present, the user's interest is estimated to be moved from the original object to the other object.

Thus, according to the configuration described above, the switching process of a gazing area can be appropriately performed in accordance with user's intention.

In addition, in the information processing device as an embodiment, when switching to the gazing area of the other object is performed, the control unit changes at least one of a position and a size of the gazing area in a stepped manner (see Figs. 8 and 9).

In accordance with this, a sudden change of the gazing area can be prevented. Thus, in a case in which an extraction image acquired by extracting a gazing area from a captured image is provided for a user, a sudden change of image details of this extraction image can be prevented, and a strange feeling acquired in a case in which the gazing image is displayed can be alleviated.

Furthermore, in the information processing device as an embodiment, the control unit performs control relating to recording of a captured image acquired using the imaging as control relating to the imaging.

For example, information representing a gazing area can be recorded together with a captured image, or an extraction image acquired by extracting a gazing area from a captured image can be recorded. Alternatively, recording of both the captured image and the extraction image or the like may be considered.

Thus, even in a case in which a user performs "imaging while doing", a captured image in which a gazing object is appropriately framed can be provided for the user.

In addition, in the information processing device as an embodiment, the control unit performs control of recording a captured image acquired using the imaging and information representing the gazing area as control relating to the imaging. In accordance with this, after end of imaging, an image acquired by extracting a gazing area from a captured image can be easily generated through editing or the like on the basis of the recorded information of the gazing area. In addition, since the captured image itself is recorded, compared to a case in which an extraction image acquired by extracting a gazing area from a captured image is recorded, the risk at the time of a failure of detection of a gazing point at the time of imaging can be reduced.

Furthermore, in the information processing device as an embodiment, the control unit performs display control relating to a through image of a captured image acquired using the imaging as control relating to the imaging.

For example, display control in which a gazing area is reflected, for example, information representing an area inside of a captured image as a gazing area is formed as a through image and is superimposed, a through image in which the gazing area is enlarged is displayed, or the like can be performed.

Accordingly, in the information processing device, a user can be allowed to check whether a gazing area is correctly recognized.

Furthermore, in the information processing device as an embodiment, in a case in which the gazing area is present inside of the captured image, the control unit performs control such that an extraction image acquired by extracting the gazing area from the captured image is displayed as a through image.

In accordance with this, in a case in which an extraction image acquired by extracting a gazing area from a captured image is provided for a user or the like, the user can be allowed to check this extraction image.

In addition, in the information processing device as an embodiment, in a case in which the gazing area comes close to an end of the captured image to be within a predetermined distance, the control unit performs control to display notification information to the user.

In accordance with this, during "imaging while doing", in a case in which a gazing object is about to be out of the frame from the captured image, an indication thereof can be notified to the user.

In addition, in the information processing device as an embodiment, in a case in which the gazing point is not present inside of the captured image, the control unit performs control to display a specific image.

For example, control can be performed such that a specific image representing information to be notified to the user in a case in which the gazing object comes out of the frame such as an image including a message indicating that the gazing object has been out of the frame, an image including information such as an arrow or the like representing a frame-out direction of the gazing object, or the like is displayed.

Thus, during "imaging while doing", a user is enabled to intuitively understand an inappropriate framing state in which a gazing object is not perceived inside of a captured image through image display. In addition, user assistance for returning the state to an appropriate framing state in which a gazing object can be captured inside of a captured image can be realized.

An information processing method according to an embodiment is an information processing method for causing an information processing device to perform: detecting a gazing point of a user on a real space on the basis of distance measurement information representing a distance measurement result for a predetermined range including an imaging range that is a target range of imaging on the real space as a target and estimation information of a visual line and eye positions of the user; and performing control relating to the imaging using information of a gazing area set on the basis of the gazing point.

With such an information processing method as well, the same operations and effects as those of the information processing device as the embodiment described above can be obtained.

Here, as embodiments, a program that causes, for example, a CPU, a digital signal processor (DSP), or the like, or a device including these to execute the processes described with reference to Figs. 11 to 13, Figs. 15 and 16, and the like and a recording medium in which this program is recorded may be considered. In other words, a recording medium according to an embodiment is a recording medium having a program that can be read by a computer device recorded therein, the program causing the computer device to execute a process of detecting a gazing point of a user on a real space on the basis of distance measurement information representing a distance measurement result for a predetermined range including an imaging range that is a target range of imaging on the real space as a target and estimation information of a visual line and eye positions of the user and performing control relating to the imaging using information of a gazing area set on the basis of the gazing point.

By using such a recording medium, an imaging control function as the embodiment described above can be realized through a software process in a device as a computer device.

The recording medium as described above can be realized as an HDD built into a device such as a computer device or a ROM or the like in a microcomputer including a CPU.

Alternatively, the recording medium may be considered in the form of a removable recording medium such as a flexible disc, a compact disc read-only memory (CD-ROM), a magneto optical (MO) disc, a digital versatile disc (DVD), a Blu-ray Disc (registered trademark), a magnetic disk, a semiconductor memory, or a memory card. The removable recording medium can be provided as what is known as package software.

Note that the advantageous effects described in the present specification are merely exemplary and are not limited, and other advantageous effects may be obtained.

### <5. Present Technology>

The present technology can also adopt the following configuration.
(1) An information processing device including: a detection unit configured to detect a gazing point of a user on a real space on the basis of distance measurement information representing a distance measurement result for a predetermined range including an imaging range that is a target range of imaging on the real space as a target and estimation information of a visual line and eye positions of the user; and a control unit configured to perform control relating to the imaging using information of a gazing area set on the basis of the gazing point.
(2) The information processing device described in (1) described above, in which the detection unit generates a three-dimensional map for the predetermined range on the basis of the distance measurement information and detect an intersection with the visual line of the user on the three-dimensional map as the gazing point.
(3) The information processing device described in (1) or (2) described above, further including a gazing area setting unit setting an area including the gazing point as the gazing area.
(4) The information processing device described in (3) described above, in which the gazing area setting unit sets an area of which positions of left, right, upper, and lower area ends are positions of a predetermined distance from the gazing point as the gazing area.
(5) The information processing device described in (3) described above, in which the gazing area setting unit identifies an object including the gazing point among objects detected in an object detecting process for the real space as a target as a gazing object and sets an area including the gazing object as the gazing area.
(6) The information processing device described in (5) described above, in which the gazing area setting unit sets the gazing area such that the gazing object is located at a position inside of an area designated in advance through an operation.
(7) The information processing device described in any one of (1) to (6) described above, in which the control unit estimates whether or not the gazing point has been moved to another object on the basis of gazing point detection results of a plurality of number of times acquired by the detection unit and, in a case in which it is estimated that the gazing point has been moved to another object, performs a switching process in which the gazing area based on the gazing point that is newly detected by the detection unit is applied as the gazing area used for control relating to the imaging.
(8) The information processing device described in (7) described above, in which the control unit estimates whether or not the gazing point has been moved to the other object on the basis of range information of objects detected in the object detecting process for the real space as a target.
(9) The information processing device described in (7) or (8) described above, in which, when estimation of the gazing point having been moved to the other object is set as a first condition, the control unit performs the switching process in a case in which the first condition and a second condition different from the first condition are satisfied.
(10) The information processing device described in (9) described above, in which the second condition is a condition that a state in which the gazing point is estimated to be present at the other object has lasted for a predetermined time or more.
(11) The information processing device described in (9) described above, in which the second condition is a condition that an imaging direction is directed in a direction in which the other object is present.
(12) The information processing device described in any one of (7) to (11) described above, in which, when switching to the gazing area of the other object is performed, the control unit changes at least one of a position and a size of the gazing area in a stepped manner.
(13) The information processing device described in any one of (1) to (12) described above, in which the control unit performs control relating to recording of a captured image acquired using the imaging as control relating to the imaging.
(14) The information processing device described in (13) described above, in which the control unit performs control of recording a captured image acquired using the imaging and information representing the gazing area as control relating to the imaging.
(15) The information processing device described in any one of (1) to (14) described above, in which the control unit performs display control relating to a through image of a captured image acquired using the imaging as control relating to the imaging.
(16) The information processing device described in (15) described above, in which, in a case in which the gazing area is present inside of the captured image, the control unit performs control such that an extraction image acquired by extracting the gazing area from the captured image is displayed as the through image.
(17) The information processing device described in (15) or (16) described above, in which, in a case in which the gazing area comes close to an end of the captured image to be within a predetermined distance, the control unit performs control to display notification information to the user.
(18) The information processing device described in any one of (15) to (17) described above, in which, in a case in which the gazing point is not present inside of the captured image, the control unit performs control to display a specific image.
(19) An information processing method for causing an information processing device to perform: detecting a gazing point of a user on a real space on the basis of distance measurement information representing a distance measurement result for a predetermined range including an imaging range that is a target range of imaging on the real space as a target and estimation information of a visual line and eye positions of the user; and performing control relating to the imaging using information of a gazing area set on the basis of the gazing point.
(20) A recording medium having a program that can be read by a computer device recorded therein, the program configured to cause the computer device to execute a process of detecting a gazing point of a user on a real space on the basis of distance measurement information representing a distance measurement result for a predetermined range including an imaging range that is a target range of imaging on the real space as a target and estimation information of a visual line and eye positions of the user and performing control relating to the imaging using information of a gazing area set on the basis of the gazing point.

### [Reference Signs List]

1, 1A Information processing device
2 Self-position/posture estimating unit
3 Distance measuring unit
4 Camera unit
5, 5AArithmetic operation unit
50 Control unit
51 Three-dimensional map generating unit
52 Gazing point detecting unit
53 Visual line vector calculating unit
54, 54A Gazing area setting unit
55 Object detecting unit
6 Visual line/eye position estimating unit
7 Display unit
7a Display screen
8 Memory unit
9 Operation unit
Ob, Ob1, Ob2 Object
P1, P2 Point
Pr Three-dimensional gazing point
Pi On-image gazing point
Aa Gazing area
Wa Area range
M1, M2 Message image
I1 Direction notification image

## Claims

1. An information processing device comprising:
a detection unit configured to detect a gazing point of a user on a real space on the basis of distance measurement information representing a distance measurement result for a predetermined range including an imaging range that is a target range of imaging on the real space as a target and estimation information of a visual line and eye positions of the user; and
a control unit configured to perform control relating to the imaging using information of a gazing area set on the basis of the gazing point.

2. The information processing device according to claim 1, wherein the detection unit generates a three-dimensional map for the predetermined range on the basis of the distance measurement information and detects an intersection with the visual line of the user on the three-dimensional map as the gazing point.

3. The information processing device according to claim 1, further comprising a gazing area setting unit setting an area including the gazing point as the gazing area.

4. The information processing device according to claim 3, wherein the gazing area setting unit sets an area of which positions of left, right, upper, and lower area ends are positions of a predetermined distance from the gazing point as the gazing area.

5. The information processing device according to claim 3, wherein the gazing area setting unit identifies an object including the gazing point among objects detected in an object detecting process for the real space as a target as a gazing object and sets an area including the gazing object as the gazing area.

6. The information processing device according to claim 5, wherein the gazing area setting unit sets the gazing area such that the gazing object is located at a position inside of an area designated in advance through an operation.

7. The information processing device according to claim 1, wherein the control unit estimates whether or not the gazing point has been moved to another object on the basis of gazing point detection results of a plurality of number of times acquired by the detection unit and, in a case in which it is estimated that the gazing point has been moved to another object, performs a switching process in which the gazing area based on the gazing point that is newly detected by the detection unit is applied as the gazing area used for control relating to the imaging.

8. The information processing device according to claim 7, wherein the control unit estimates whether or not the gazing point has been moved to the other object on the basis of range information of objects detected in the object detecting process for the real space as a target.

9. The information processing device according to claim 7, wherein, when estimation of the gazing point having been moved to the other object is set as a first condition, the control unit performs the switching process in a case in which the first condition and a second condition different from the first condition are satisfied.

10. The information processing device according to claim 9, wherein the second condition is a condition that a state in which the gazing point is estimated to be present at the other object has lasted for a predetermined time or more.

11. The information processing device according to claim 9, wherein the second condition is a condition that an imaging direction is directed in a direction in which the other object is present.

12. The information processing device according to claim 7, wherein, when switching to the gazing area of the other object is performed, the control unit changes at least one of a position and a size of the gazing area in a stepped manner.

13. The information processing device according to claim 1, wherein the control unit performs control relating to recording of a captured image acquired using the imaging as control relating to the imaging.

14. The information processing device according to claim 13, wherein the control unit performs control of recording a captured image acquired using the imaging and information representing the gazing area as control relating to the imaging.

15. The information processing device according to claim 1, wherein the control unit performs display control relating to a through image of a captured image acquired using the imaging as control relating to the imaging.

16. The information processing device according to claim 15, wherein, in a case in which the gazing area is present inside of the captured image, the control unit performs control such that an extraction image acquired by extracting the gazing area from the captured image is displayed as the through image.

17. The information processing device according to claim 15, wherein, in a case in which the gazing area comes close to an end of the captured image to be within a predetermined distance, the control unit performs control to display notification information to the user.

18. The information processing device according to claim 15, wherein, in a case in which the gazing point is not present inside of the captured image, the control unit performs control to display a specific image.

19. An information processing method for causing an information processing device to perform:
detecting a gazing point of a user on a real space on the basis of distance measurement information representing a distance measurement result for a predetermined range including an imaging range that is a target range of imaging on the real space as a target and estimation information of a visual line and eye positions of the user; and
performing control relating to the imaging using information of a gazing area set on the basis of the gazing point.

20. A recording medium having a program that can be read by a computer device recorded therein,
the program configured to cause the computer device to execute a process of detecting a gazing point of a user on a real space on the basis of distance measurement information representing a distance measurement result for a predetermined range including an imaging range that is a target range of imaging on the real space as a target and estimation information of a visual line and eye positions of the user and performing control relating to the imaging using information of a gazing area set on the basis of the gazing point.
